# EUROPÄISCHE PATENTSCHRIFT

(11) **EP 3 283 550 B1**
(45) Veröffentlichungstag und Bekanntmachung des Hinweises auf die Patenterteilung: **16.12.2020**
(21) Anmeldenummer: 16717614.8
(22) Anmeldetag: 15.04.2016
(51) Int. Cl.: C08G 77/08, C09J 183/04, C08L 83/04

(54) **AMIDINGRUPPEN-HALTIGER KATALYSATOR**
CATALYST CONTAINING AMIDINE GROUPS
CATALYSEUR CONTENANT DES GROUPES AMIDINES

(30) Priorität: 16.04.2015 EP 15163898
(43) Veröffentlichungstag der Anmeldung: 21.02.2018
(73) Patentinhaber: Sika Technology AG, 6340 Baar (CH)
(72) Erfinder: CANNAS, Rita, 8600 Dübendorf (CH); BURCKHARDT, Urs, 8049 Zürich (CH)
(74) Vertreter: Sika Patent Attorneys
(86) Internationale Anmeldenummer: PCT/EP2016/058435
(87) Internationale Veröffentlichungsnummer: WO 2016/166336

(56) Entgegenhaltungen:
- EP-A1- 1 985 666
- EP-A1- 2 100 923
- EP-A1- 2 388 297
- JP-A- 2007 246 577

## Beschreibung

### Technisches Gebiet

Die Erfindung betrifft Amidingruppen-haltige Katalysatoren für Silangruppen-haltige Zusammensetzungen.

### Stand der Technik

Härtbare Zusammensetzungen auf der Basis von Silangruppen-haltigen Polymeren spielen eine bedeutende Rolle in vielen technischen Anwendungen, beispielsweise als Klebstoffe, Dichtstoffe oder Beschichtungen. Silangruppen-haltige Polymere sind dabei insbesondere Polyorganosiloxane, welche gemeinhin als "Silicone" bzw. "Siliconkautschuke" bezeichnet werden, und Silangruppen-haltige organische Polymere, welche auch als "silanfunktionelle Polymere", "silanmodifizierte Polymere" (SMP) oder "silanterminierte Polymere" (STP) bezeichnet werden. Ihre Aushärtung erfolgt über Vernetzungsreaktionen der Silangruppen, welche unter dem Einfluss von Feuchtigkeit hydrolysieren, als Silanolgruppen untereinander kondensieren und dabei Siloxanbindungen bilden. Zur Beschleunigung der Aushärtung werden häufig Katalysatoren eingesetzt. Sehr oft handelt es sich dabei um toxikologisch bedenkliche Stoffe, welche eine potentielle Gefährdung von Verarbeiter und Umwelt darstellen, insbesondere nach der Aushärtung der Zusammensetzung, wenn der Katalysator oder dessen Abbauprodukte durch Ausgasen, Migration oder Auswaschen freigesetzt werden.

Als Vernetzungskatalysatoren werden klassischerweise Organozinn-Verbindungen, insbesondere Dialkylzinn(IV)carboxylate, eingesetzt. Diese zeichnen sich durch eine sehr hohe Aktivität in Bezug auf die Silanol-Kondensation aus und sind sehr hydrolysebeständig; allerdings sind sie gesundheitsschädlich und stark wassergefährdend. Oft werden sie mit weiteren Katalysatoren kombiniert, hauptsächlich mit basischen Verbindungen wie insbesondere Aminen, welche vor allem die vorgeschaltete Hydrolyse der Silangruppen beschleunigen.

Aufgrund einer stärkeren Gewichtung von EHS-Aspekten durch Berufsverbände und Verbraucher sowie schärferer staatlicher Regulierung werden seit einiger Zeit vermehrt Anstrengungen unternommen, die Organozinn-Verbindungen durch andere, weniger toxische Katalysatoren zu ersetzen. So wurden etwa Organotitanate, -zirkonate und -aluminate als alternative Metall-Katalysatoren beschrieben. Diese haben aber zumeist eine geringere katalytische Aktivität in Bezug auf die Silanol-Kondensation und bewirken eine deutlich langsamere Vernetzung. Wegen ihrer mangelnden Hydrolysestabilität können sie beim Lagern der Zusammensetzung durch Restfeuchte der Inhaltsstoffe einen Grossteil ihrer Aktivität verlieren, wodurch sich die Aushärtung stark verlangsamt oder ganz zum Erliegen kommt.

Eine weitere bekannte Alternative zu Organozinn-Verbindungen stellen stark basische Stickstoff-Verbindungen aus der Klasse der Amidine und Guanidine dar, welche in Kombination mit den erwähnten Metall-Katalysatoren oder auch allein eingesetzt werden können. Viele der gebräuchlichen Amidin- und Guanidin-Katalysatoren, wie insbesondere 1,8-Diazabicyclo[5.4.0]undec-7-en (DBU) und 1,1,3,3-Tetramethylguanidin (TMG), sind allerdings leichtflüchtige und geruchsintensive sowie ebenfalls gesundheitsschädliche und umweltgefährdende Stoffe. Ausserdem neigen sie dazu, aufgrund geringer Verträglichkeit in der Zusammensetzung zu migrieren und dadurch Separation, Ausschwitzen oder Substratverschmutzung zu verursachen. Die beschriebene Verwendung von aromatischen, bei Raumtemperatur festen Amidinen und Guanidinen schafft hier Abhilfe, erfordert aber den Einsatz von geeigneten Lösemitteln und bringt Einbussen bei der katalytischen Aktivität und damit der Vernetzungsgeschwindigkeit.

Das Dokument EP 2 100 923 offenbart die Verwendung von 1-(2-hydroxyethyl)-2-methylimidazolin als Katalysator für Silangruppen-haltige Polymere.

### Darstellung der Erfindung

Aufgabe der vorliegenden Erfindung ist es daher, einen Katalysator für die Vernetzung von Silangruppen-haltigen Zusammensetzungen bereitzustellen, welcher eine hohe katalytische Aktivität besitzt und damit eine rasche Aushärtung der applizierten Zusammensetzung ermöglicht, sowie eine hohe Selektivität aufweist und somit die Lagerstabilität der Zusammensetzung nicht über Gebühr beeinträchtigt. Weiterhin soll der Katalysator einen geringen Dampfdruck und eine hohe Verträglichkeit mit der Zusammensetzung aufweisen, so dass er weder zu Separierung oder Migration noch zum Verdampfen neigt, und soll möglichst geruchlos und wenig toxisch sein.

Diese Aufgabe wird durch ein Amidin der Formel (I) und/oder ein Umsetzungsprodukt davon gelöst. Das Amidin der Formel (I) enthält eine aliphatische Amidin-Gruppe und zeigt eine hohe katalytische Aktivität, während aromatische Amidine kaum oder gar nicht katalytisch aktiv sind. Im Gegensatz zu vielen aus dem Stand der Technik bekannten aliphatische Amidin- oder Guanidin-Gruppen aufweisenden Katalysatoren ist es bei Raumtemperatur weitgehend geruchlos und nicht flüchtig. Es zeigt eine hohe kalatytische Aktivität bei guter Selektivität. Dies ist besonders überraschend, würde man doch aufgrund der starken Wechselwirkungen der polaren Gruppen und/oder des erhöhten Molekulargewichts eine verminderte Aktivität im Vergleich mit kleineren, unpolareren und somit mobileren Amidinen erwarten.

Mit diesen Eigenschaften ist das Amidin der Formel (I) und/oder ein Umsetzungsprodukt davon hervorragend geeignet als Katalysator für die Vernetzung von Zusammensetzungen auf der Basis von Silangruppen-haltigen Polymeren, wo es als alleiniger Katalysator oder in Kombination mit weiteren Katalysatoren eine schnelle Aushärtung zu einem mechanisch hochwertigen und beständigen Material ermöglicht, ohne die Lagerfähigkeit der unausgehärteten Zusammensetzung zu beeinträchtigen. Es ist sowohl vor als auch nach der Aushärtung ausgezeichnet verträglich mit der Zusammensetzung und neigt weder zu Separierung noch zu Migration, im Gegensatz zu vielen ähnlichen Amidin- oder Guanidin-Katalysatoren nach dem Stand der Technik, wo Katalysator-bedingte Migrationseffekte eine starke Rolle spielen. Es ermöglicht emissions- und geruchsarme Produkte, welche weder schmierige oder klebrige Oberflächen aufweisen noch Substratverschmutzung verursachen. Schliesslich sind das Amidin der Formel (I) und Umsetzungsprodukte davon in einem überraschend einfachen und schnellen Verfahren ohne Hilfsstoffe aus handelsüblichen, preisgünstigen Ausgangsmaterialien herstellbar.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung von
- mindestens einem Amidin der Formel (I),

   Y-A-Z (I)

   wobei
   A für einen zweiwertigen Kohlenwasserstoff-Rest mit 2 bis 30 C-Atomen, welcher gegebenenfalls ungesättigte Anteile und gegebenenfalls Ether-Sauerstoff oder sekundären oder tertiären Amin-Stickstoff enthält, steht,
   Y wie im Anspruch 1 definiert wird, und
   Z für eine über ein Stickstoffatom gebundene Amidingruppe steht,
   wobei Y und Z durch mindestens zwei C-Atome voneinander getrennt sind, und/oder von
- mindestens einem Umsetzungsprodukt von mindestens einem Amidin der Formel (I) mit mindestens einer funktionellen Verbindung als Katalysator für die Vernetzung einer Zusammensetzung auf Basis von Silangruppen-haltigen Polymeren,
   wobei A nicht für einen Polyoxyalkylenrest steht und
   wobei das Amidin der Formel (I) kein Stickstoffatom enthält, welches direkt an einen aromatischen Ring gebunden oder Teil eines heteroaromatischen Ringsystems, wie zum Beispiel Imidazol oder Pyrimidin, ist.

Im vorliegenden Dokument bezeichnet der Begriff "Silangruppe" eine an einen organischen Rest oder an einen Polyorganosiloxan-Rest gebundene Silylgruppe mit einer bis drei, insbesondere zwei oder drei, hydrolysierbaren Substituenten am Silicium-Atom. Besonders gebräuchliche hydrolysierbare Substituenten sind Alkoxy-Reste. Diese Silangruppen werden auch als "Alkoxysilangruppen" bezeichnet. Silangruppen können auch in partiell oder vollständig hydrolysierter Form vorhanden sein.

Als "Hydroxysilan", "Isocyanatosilan", "Aminosilan" bzw. "Mercaptosilan" werden Organoalkoxysilane bezeichnet, die am organischen Rest zusätzlich zur Silangruppe eine oder mehrere Hydroxyl-, Isocyanato-, Amino- bzw. Mercaptogruppen aufweisen.

Als "funktionelle Verbindung" wird eine Verbindung bezeichnet, welche über eine Reaktivgruppe mit dem Amidin der Formel (I) zu einem Umsetzungsprodukt reagieren kann.

Als "primäre Aminogruppe" bzw. "primärer Amin-Stickstoff" wird eine NH₂-Gruppe bzw. deren Stickstoffatom bezeichnet, die bzw. das an einen organischen Rest gebunden ist, und als "sekundäre Aminogruppe" bzw. "sekundärer Amin-Stickstoff" wird eine NH-Gruppe bzw. deren Stickstoffatom bezeichnet, die bzw. das an zwei organische Reste, welche auch gemeinsam Teil eines Rings sein können, gebunden ist, und als "tertiäre Aminogruppe" bzw. "tertiärer Amin-Stickstoff" wird eine N-Gruppe bzw. deren Stickstoffatom bezeichnet, die bzw. das an drei organische Reste, welche auch zu zweit oder zu dritt Teil eines oder mehrerer Ringe sein können, gebunden ist.

Als "Polyoxyalkylenrest" wird ein Ethergruppen-haltiger linearer Kohlenwasserstoffrest bezeichnet, welcher nacheinander mehr als zwei Repetiereinheiten des Typs (O-R) enthält, wobei R für einen Alkylenrest steht, wie beispielsweise aus der Polyaddition von Ethylenoxid oder 1,2-Propylenoxid an Startermoleküle mit zwei aktiven Wasserstoffatomen.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Der Begriff "organisches Polymer" umfasst ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde und im PolymerRückgrat mehrheitlich Kohlenstoffatome aufweist, sowie Umsetzungsprodukte eines solchen Kollektivs von Makromolekülen. Polymere mit einem Polyorganosiloxan-Rückgrat (gemeinhin als "Silicone" bezeichnet) stellen keine organischen Polymere im Sinne des vorliegenden Dokuments dar.

Der Begriff "Silangruppen-haltiger Polyether" umfasst auch Silangruppen-haltige organische Polymere, welche zusätzlich zu Polyether-Einheiten auch Urethangruppen, Harnstoffgruppen oder Thiourethangruppen enthalten können. Solche Silangruppen-haltige Polyether können auch als "Silangruppen-haltige Polyurethane" bezeichnet werden.

Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Eine gestrichelte Linie in den Formeln in diesem Dokument stellt jeweils die Bindung zwischen einem Substituenten und dem zugehörigen Molekülrest dar. Als "Raumtemperatur" wird eine Temperatur von ca. 23 °C bezeichnet.

Das Amidin der Formel (I) kann auch in tautomerer Form vorliegen. Alle möglichen Tautomerformen des Amidins der Formel (I) werden im Rahmen der vorliegenden Erfindung als gleichwertig angesehen.

Weiterhin kann das Amidin der Formel (I) in protonierter Form vorliegen. Ebenfalls kann das Amidin der Formel (I) in komplexierter Form vorliegen, insbesondere mit Kationen von Zink, Eisen oder Molybdän.

Bevorzugt steht Z für 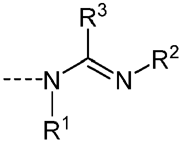 oder 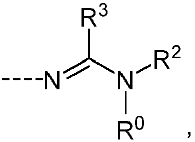 wobei
R⁰ für einen Wasserstoff-Rest oder für einen Alkyl- oder Cycloalkyl- oder Aralkyl-Rest mit 1 bis 8 C-Atomen steht,
R¹ für einen Wasserstoff-Rest oder für einen Alkyl- oder Cycloalkyl- oder Aralkyl-Rest mit 1 bis 8 C-Atomen oder zusammen mit R² für R⁴ steht,
R² für einen Wasserstoff-Rest oder für einen Alkyl-, Cycloalkyl- oder Aralkyl-Rest mit 1 bis 18 C-Atomen, welcher gegebenenfalls Ether-Sauerstoff oder tertiären Amin-Stickstoff enthält, oder zusammen mit R¹ für R⁴ steht,
R³ für einen Wasserstoff-Rest oder für einen Alkyl- oder Cycloalkyl- oder Aralkyl-Rest mit 1 bis 12 C-Atomen steht, und
R⁴ für 1,2-Ethylen, 1,2-Propylen, 1,3-Propylen, 1,3-Butylen oder 1,3-Pentylen steht,
   wobei
R⁰ und R² auch zusammen für einen Alkylen-Rest mit 3 bis 6 C-Atomen, welcher gegebenenfalls Ether-Sauerstoff oder tertiären Amin-Stickstoff enthält, stehen können, und
R² und R³ auch zusammen für einen Alkylen-Rest mit 3 bis 6 C-Atomen stehen können.
R⁰ steht bevorzugt für einen Wasserstoff-Rest oder für einen Alkyl-Rest mit 1 bis 4 C-Atomen, insbesondere für einen Wasserstoff-Rest.
R¹ steht bevorzugt für einen Wasserstoff-Rest oder für einen Alkyl- oder Cycloalkyl- oder Aralkyl-Rest mit 1 bis 4 C-Atomen oder zusammen mit R² für R⁴.
R² steht bevorzugt für einen Alkyl-, Cycloalkyl- oder Aralkyl-Rest mit 1 bis 12, insbesondere 1 bis 8, C-Atomen, welcher gegebenenfalls Ether-Sauerstoff oder tertiären Amin-Stickstoff enthält, oder zusammen mit R¹ für R⁴.
R³ steht bevorzugt für einen Wasserstoff-Rest oder für einen Alkyl-, Cycloalkyl- oder Aralkyl-Rest mit 1 bis 8, insbesondere 1 bis 4, C-Atomen.
R³ steht besonders bevorzugt für einen Wasserstoff-Rest oder für einen Methyl-Rest, am meisten bevorzugt für einen Methyl-Rest.

Besonders bevorzugt steht Z für

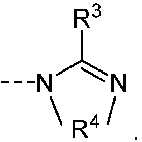

Ein solches Amidin der Formel (I) ist besonders einfach und in hoher Reinheit herstellbar.

Bevorzugt steht R⁴ für 1,3-Propylen. Ein solches Amidin weist eine besonders hohe katalytische Aktivität auf.

Meist bevorzugt steht R³ für Methyl und R⁴ für 1,3-Propylen.

Bevorzugt weist A 2 bis 20, insbesondere 2 bis 12, C-Atome auf.

Y und Z sind durch mindestens zwei C-Atome voneinander getrennt. Ein Amidin, bei welchem Y und Z nur durch ein C-Atom voneinander getrennt sind, ist sehr unstabil und deshalb nicht geeignet für die erfindungsgemässe Verwendung. Ein Rest A mit zwei C-Atomen steht also für 1,2-Ethylen und kann nicht für 1,1-Ethylen stehen.

Besonders bevorzugt ist A ausgewählt aus der Gruppe bestehend aus 1,2-Ethylen, 1,3-Propylen, 1,2-Propylen, 1,3-Pentylen, 1,1-Dimethyl-1,2-ethylen, 1,5-Pentylen, 2-Methyl-1,5-pentylen, 1,6-Hexylen, 2,2(4),4-Trimethyl-1,6-hexamethylen, 1,8-Octylen, 1,10-Decylen, 1,12-Dodecylen, (1,5,5-Trimethylcyclohexan-1-yl)methan-1,3, 1,3-Cyclohexylen-bis(methylen), 1,4-Cyclohexylen-bis(methylen), 1,3-Phenylen-bis(methylen), 2- und/oder 4-Methyl-1,3-cyclohexylen, N-Methyl-4-aza-1,7-heptylen, N-Ethyl-4-aza-1,7-heptylen, 3-Aza-1,5-pentylen, 4-Aza-1,7-heptylen, 3-Aza-1,6-hexylen, 7-Aza-1,13-tridecylen, 3-Oxa-1,5-pentylen, 3,6-Dioxa-1,8-octylen und 4,7-Dioxa-1,10-decylen.

Ein solches Amidin der Formel (I) ist besonders einfach zugänglich und katalytisch besonders aktiv.

In einer bevorzugten Ausführungsform steht Y für NR⁸R⁹, wobei R⁸ und R⁹ unabhängig voneinander für einen Alkyl-Rest mit 1 bis 8 C-Atomen, oder zusammen für einen Alkylen-Rest mit 4 bis 10 C-Atomen stehen.

Diese Amidine der Formel (I) weisen den Vorteil auf, dass sie eine besonders hohe katalytische Aktivität aufweisen und besonders einfach herstellbar sind.

In einer weiteren bevorzugten Ausführungsform steht Y für HX, wobei X NR⁷ steht, wobei R⁷ für einen Wasserstoff-Rest oder für einen Alkyl- oder Cycloalkyl- oder Aralkyl-Rest mit 1 bis 8 C-Atomen steht.

Ein solches Amidin der Formel (I) ist ein Amidin der Formel (I a).

HX-A-Z (I a)

In der Formel (I a) weisen A, X und Z die bereits genannten Bedeutungen auf. Ein Amidin der Formel (I a) weist den Vorteil auf, dass es besonders einfach mit einer funktionellen Verbindung zu einem Umsetzungsprodukt umgesetzt werden kann.

X steht bevorzugt für NR⁷. Ein solches Amidin weist eine besonders hohe katalytische Aktivität auf und lässt sich ganz besonders einfach mit einer funktionellen Verbindunge zu einem Umsetzungsprodukt umsetzen.

R⁷ steht bevorzugt für einen Wasserstoff-Rest.

R⁷ steht weiterhin bevorzugt für einen Alkyl- oder Cycloalkyl-Rest mit 1 bis 8 C-Atomen.

Besonders bevorzugt steht Y also für NR⁸R⁹ oder für NHR⁷. Solche Amidine der Formel (I) sind katalytisch besonders aktiv.

Ein geeignetes Amidin der Formel (I) wird insbesondere erhalten durch die Umsetzung von
- mindestens einem Amin der Formel (II a) oder (II b),

   Y-A-NHR¹ (II a)

   Y-A-NH-R⁴-NH₂ (II b)
- gegebenenfalls mindestens einem Amin der Formel R²-NH-R⁰, und
- mindestens einem Reagens zur Einführung von Amidin-Gruppen.

Dabei weisen Y, A, R⁰ R¹ R² und R⁴ die bereits genannten Bedeutungen auf.

Das Reaktionsprodukt aus dieser Umsetzung kann ohne weitere Aufarbeitung als Katalysator für die Vernetzung einer Zusammensetzung auf Basis von Silangruppen-haltigen Polymeren verwendet werden.

Als Amin der Formel (II a) oder (II b) geeignet sind insbesondere
- aliphatische, cycloaliphatische oder arylaliphatische primäre Diamine, insbesondere Ethylendiamin, 1,2- und 1,3-Propandiamin, 2-Methyl-1,2-propandiamin, 2,2-Dimethyl-1,3-propandiamin, 1,3- und 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPD), 2- und/oder 4-Methyl-1,3-diaminocyclohexan, 1,3- oder 1,4-Bis-(aminomethyl)cyclohexan, 2,5(2,6)-Bis(aminomethyl)bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol, 1,4-Bis(aminomethyl)benzol, 4-Aminomethyl-1,8-octandiamin, oder Produkte aus der doppelten Cyanoethylierung und nachfolgenden Reduktion von Fettaminen, welche abgeleitet sind von natürlichen Fettsäuren, wie N,N-Bis(3-aminopropyl)dodecylamin oder N,N-Bis(3-aminopropyl)talgalkylamin, erhältlich als Triameen® Y12D oder Triameen® YT (von Akzo Nobel);
- Ethergruppenhaltige aliphatische oder cycloaliphatische primäre Diamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin oder 4,7,10-Trioxatridecan-1,13-diamin;
- Diamine mit einer primären und einer sekundären Aminogruppe, insbesondere N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, 3-(4-Aminobutyl)-piperidin, N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentylamin, 3-Hexylamino-1-pentylamin, 3-(2-Ethylhexyl)amino-1-pentylamin, 3-Dodecylamino-1-pentylamin, 3-Cyclohexylamino-1-pentylamin, oder 3-aminopropylierte Fettamine wie insbesondere N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, wie sie beispielsweise unter dem Handelsnamen Duomeen® (von Akzo Nobel) erhältlich sind;
- Polyalkylenamine und weitere Polyamine mit primären und sekundären und/oder tertiären Aminogruppen, insbesondere Diethylentriamin (DETA), Dipropylentriamin (DPTA), N-(2-Aminoethyl)-1,3-propandiamin (N3-Amin), N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin, N-(2-Aminoethyl)piperazin, N-(2-Aminopropyl)piperazin, 3-(Dimethylamino)ethylamin, 3-(Dimethylamino)propylamin, 3-(Diethylamino)ethylamin, 3-(Diethylamino)propylamin, N¹,N¹-Diethyl-1,4-pentandiamin, N¹-((3-Dimethylamino)-propyl)-1,3-diaminopropan, oder N-Alkyl-N'-(2-aminoethyl)-1,2-ethandiamin oder N-Alkyl-N'-(3-aminopropyl)-1,2-ethandiamin oder N-Alkyl-N'-(2-aminoethyl)-1,3-propandiamin oder N-Alkyl-N'-(3-aminopropyl)-1,3-propandiamin mit Alkylgruppen wie insbesondere Methyl, Ethyl, Butyl, Hexyl, 2-Ethyhexyl, Dodecyl, Cyclohexyl oder Benzyl.

Bevorzugt ist das Amin der Formel (II a) oder (II b) ausgewählt aus der Gruppe bestehend aus 1,5-Diamino-2-methylpentan (MPMD), 1,6-Hexandiamin, 2,2,4- und 2,4,4-Trimethylhexamethylendiamin (TMD), 1,8-Octandiamin, 1,10-Decandiamin, 1,12-Dodecandiamin, 1-Amino-3-aminomethyl-3,5,5-trimethylcyclohexan (Isophorondiamin oder IPD), 1,3-Bis(aminomethyl)cyclohexan, 1,4-Bis-(aminomethyl)cyclohexan, 1,3-Bis(aminomethyl)benzol, Diethylentriamin, Dipropylentriamin, N-(2-Aminoethyl)-1,3-propandiamin (N3-Amin), 3-(Dimethylamino)ethylamin, 3-(Dimethylamino)propylamin, 3-(Diethylamino)ethylamin, 3-(Diethylamino)propylamin, N¹-((3-Dimethylamino)propyl)-1,3-diaminopropan, Bis-(2-aminoethyl)ether, 3,6-Dioxaoctan-1,8-diamin, 4,7-Dioxadecan-1,10-diamin, 5-Amino-1-pentanol, 6-Amino-1-hexanol, 3-Aminomethyl-3,5,5-trimethylcyclohexanol, 2-(2-Aminoethoxy)ethanol, N-(2-Aminoethyl)-2-aminoethanol, N-(3-Aminopropyl)-2-aminoethanol und N-Alkyl-N'-(2-aminoethyl)-1,2-ethandiamin, N-Alkyl-N'-(3-aminopropyl)-1,2-ethandiamin, N-Alkyl-N'-(2-aminoethyl)-1,3-propandiamin und N-Alkyl-N'-(3-aminopropyl)-1,3-propandiamin mit Alkylgruppen ausgewählt aus Methyl, Ethyl, Butyl, Hexyl und Benzyl.

Als Amin der Formel R²-NH-R⁰ geeignet sind aliphatische, cycloaliphatische oder arylaliphatische Monoamine, insbesondere Amine der Formel R²-NH₂. Bevorzugt sind Methylamin, Ethylamin, Propylamin, Isopropylamin, n-Butylamin, Isobutylamin, sec.Butylamin, n-Hexylamin, Cyclohexylamin, Benzylamin, 2-Ethylhexylamin, n-Octylamin, n-Decylamin, Laurylamin oder 2-Methoxyethylamin.

Das Reagens zur Einführung von Amidin-Gruppen ist bevorzugt ausgewählt aus der Gruppe bestehend aus Orthoestern, 1,3-Ketoestern, 1,3-Ketoamiden, Nitrilen, Imidsäureestern, Imidsäurechloriden, Amiden und Lactamen.

Davon bevorzugt sind Orthoester, 1,3-Ketoester oder Nitrile.

Als Orthoester bevorzugt sind Orthoester der Formel R³-C(OR^{a})₃, wobei R^{a} für einen Alkylrest mit 1 bis 4 C-Atomen steht und R³ die bereits genannten Bedeutungen aufweist, insbesondere ein Orthoformiat, Orthoacetat, Orthopropionat, Orthobutyrat oder Orthovalerat, besonders bevorzugt Trimethylorthoformiat, Triethylorthoformiat, Trimethylorthoacetat oder Triethylorthoacetat.

Als 1,3-Ketoester bevorzugt sind 1,3-Ketoester der Formel R³-C(O)CH₂C(O)OR^{a}, wobei R^{a} und R³ die bereits genannten Bedeutungen aufweisen, insbesondere Methylacetoacetat, Ethylacetoacetat, Isopropylacetoacetat oder tert.Butylacetoacetat, besonders bevorzugt Ethylacetoacetat.

Als Nitril bevorzugt sind Nitrile der Formel R³-CN, wobei R³ die bereits genannten Bedeutungen aufweist, insbesondere Acetonitril, Propionitril, Butyronitril, Isobutyronitril, Valeronitril oder Capronitril, besonders bevorzugt Acetonitril.

Das Reagens zur Einführung von Amidin-Gruppen ist besonders bevorzugt ausgewählt aus der Gruppe bestehend aus Trimethylorthoformiat, Triethylorthoformiat, Trimethylorthoacetat, Triethylorthoacetat, Methylacetoacetat, Ethylacetoacetat, Isopropylacetoacetat, tert.Butylacetoacetat und Acetonitril. Mit diesen Reagentien werden auf besonders einfache Weise Amidine der Formel (I) von besonders hoher katalytischer Aktivität erhalten.

Die Umsetzung wird bevorzugt bei erhöhter Temperatur, gegebenenfalls unter erhöhtem Druck und gegebenenfalls in Gegenwart eines Katalysators, durchgeführt, wobei aus dem Reagens freigesetzte Abspalter wie Alkohole, Ester oder Amine während oder nach der Umsetzung bevorzugt entfernt werden, insbesondere mittels Destillation, gegebenenfalls unter Vakuum.

Bevorzugt wird das Verhältnis zwischen dem Amin der Formel (II a) oder (II b), dem gegebenenfalls vorhandenen Amin der Formel R²-NH-R⁰ und dem Reagens so gewählt, dass das Reagens bei der Umsetzung vollständig umgesetzt wird.

Wird ein Orthoester der Formel R³-C(OR^{a})₃ eingesetzt, so erfolgt die Umsetzung bevorzugt bei einer Temperatur von 40 bis 160 °C, insbesondere 60 bis 140 °C, wobei der freigesetzte Alkohol R^{a}OH bevorzugt destillativ entfernt wird. Gegebenenfalls wird dabei ein Katalysator eingesetzt, insbesondere eine Säure.

Wird ein 1,3-Ketoester der Formel R³-C(O)CH₂C(O)OR^{a} eingesetzt, so erfolgt die Umsetzung bevorzugt bei einer Temperatur von 20 bis 100 °C, insbesondere 40 bis 80 °C, wobei der freigesetzte Ester CH₃C(O)OR^{a} bevorzugt destillativ entfernt wird. Bevorzugt wird dabei ein Katalysator eingesetzt, insbesondere eine Säure, bevorzugt eine Sulfonsäure.

Wird ein Nitril der Formel R³-CN eingesetzt, so erfolgt die Umsetzung bevorzugt bei einer Temperatur von 60 bis 180 °C, insbesondere 80 bis 160 °C, gegebenenfalls unter erhöhtem Druck, wobei der freigesetzte Ammoniak bevorzugt destillativ entfernt wird. Bevorzugt wird dabei ein Katalysator eingesetzt, insbesondere eine Lewissäure, bevorzugt Bortrifluorid-Etherat, Lithiumperchlorat, Zinkchlorid, Zink(III)-trifluormethansulfonat oder Lanthan(III)trifluormethansulfonat.

Besonders bevorzugt wird ein Amin der Formel (II b) verwendet, insbesondere ausgewählt aus der Gruppe bestehend aus Diethylentriamin, Dipropylentriamin, N-(2-Aminoethyl)-1,3-propandiamin (N3-Amin), N¹-((3-Dimethylamino)-propyl)-1,3-diaminopropan, N-(2-Aminoethyl)-2-aminoethanol, N-(3-Aminopropyl)-2-aminoethanol und N-Alkyl-N'-(2-aminoethyl)-1,2-ethandiamin, N-Alkyl-N'-(3-aminopropyl)-1,2-ethandiamin, N-Alkyl-N'-(2-aminoethyl)-1,3-propandiamin und N-Alkyl-N'-(3-aminopropyl)-1,3-propandiamin mit Alkylgruppen ausgewählt aus Methyl, Ethyl, Butyl, Hexyl und Benzyl.

Mit diesen Aminen kann auf einfache Weise ein Amidin der Formel (I) mit Z der Formel 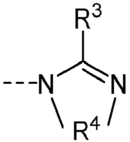 hergestellt werden, ohne dass dabei ein Amin der Formel R²-NH-R⁰ mitverwendet wird.

Ein bevorzugtes Amidin der Formel (I) ist ausgewählt aus der Gruppe bestehend aus 1-(2-Aminoethyl)-2-methyl-imidazolin, 1-(3-Aminopropyl)-2-methyl-imidazolin, 1-(2-Aminoethyl)-2-methyl-1,4,5,6-tetrahydropyrimidin, 1-(3-Aminopropyl)-2-methyl-1,4,5,6-tetrahydropyrimidin und 1-(3-Dimethylaminopropyl)-2-methyl-1,4,5,6-tetrahydropyrimidin.

Davon bevorzugt sind die Aminoamidine, welche eine besonders hohe katalytische Aktivität besitzen.

Davon weiterhin bevorzugt sind die Tetrahydropyrimidine, welche eine besonders hohe katalytische Aktivität besitzen.

Davon ganz besonders bevorzugt ist 1-(3-Dimethylaminopropyl)-2-methyl-1,4,5,6-tetrahydropyrimidin. Dieses Amidin der Formel (I) ist aus gut erhältlichen Ausgangsstoffen in einem einfachen Verfahren und in hoher Reinheit herstellbar und weist eine ganz besonders hohe katalytische Aktivität auf.

In einer bevorzugten Ausführungsform liegt das Amidin der Formel (I) zumindest teilweise als Umsetzungsprodukt mit einer funktionellen Verbindung vor. Die funktionelle Verbindung weist bevorzugt Reaktivgruppen auf, welche gegenüber Hydroxyl-, Mercapto- oder Amino-Gruppen reaktionsfähig sind. Die funktionelle Verbindung reagiert somit bevorzugt über die Gruppe Y mit dem Amidin der Formel (I). Bevorzugt steht Y dabei für HX.

Bevorzugt weist die funktionelle Verbindung mindestens eine Reaktivgruppe ausgewählt aus Epoxid, Aziridin, Carbonat, Carbonsäureanhydrid, Carbonsäure, Carbonsäureester, Lacton, Carbonsäurechlorid, Keton, Aldehyd, 1,3-Diketon, 1,3-Ketoester, 1,3-Ketoamid, Cyanat, Thiocyanat, Isocyanat, Isothiocyanat, (Meth)acrylat, (Meth)acrylamid, (Meth)acrylnitril, Maleat, Maleamid, Maleimid, Fumarat, Fumaramid, Itaconat, Itaconamid, Crotonat und Crotonamid auf. Davon bevorzugt ist Epoxid, Carbonat, Carbonsäureanhydrid, Carbonsäureester, Lacton, Keton, Aldehyd, 1,3-Diketon, 1,3-Ketoester, 1,3-Ketoamid, Cyanat, Isocyanat, Acrylat, Methacrylat, Acrylamid, Methacrylamid, Maleat, Maleimid, Fumarat oder Itaconat.

Besonders bevorzugt ist Epoxid, Carbonat, Carbonsäureester, Lacton, Keton, Aldehyd, 1,3-Diketon, 1,3-Ketoester, Isocyanat, Acrylat oder Methacrylat. Verbindungen mit den bevorzugten Reaktivgruppen sind besonders einfach zugänglich und ermöglichen in einem besonders einfachen Verfahren stabile Umsetzungsprodukte mit einer hohen katalytischen Aktivität.

Als Epoxidgruppe bevorzugt ist eine Glycidyl-Gruppe, insbesondere eine Glycidyloxy-Gruppe. Eine solche funktionelle Verbindung lässt sich besonders einfach mit dem Amidin der Formel (I) umsetzen.

Als Aziridingruppe bevorzugt ist eine N-Aziridinyl-Gruppe. Eine solche funktionelle Verbindung ist einfach verfügbar und lässt sich besonders gut mit einem Amidin der Formel (I) umsetzen.

Die funktionelle Verbindung weist bevorzugt eine bis sechs der genannten Reaktivgruppen auf, besonders bevorzugt eine oder zwei oder drei der genannten Reaktivgruppen.

Weist die funktionelle Verbindung mehr als eine Reaktivgruppe auf, sind diese bevorzugt gleich, wie beispielsweise in Diepoxiden oder Triacrylaten. Es ist aber auch möglich, dass die funktionelle Verbindung verschiedene Reaktivgruppen aufweist.

Als funktionelle Verbindung geeignet sind insbesondere im Handel erhältliche Substanzen.

Als funktionelle Verbindung mit mindestens einer Epoxidgruppe geeignet sind insbesondere
- aliphatische Monoepoxide, bevorzugt Propylenoxid, Butylenoxid, Hexylenoxid, Glycidol, Allylglycidylether, Butylglycidylether, Hexylglycidylether, 2-Ethylhexylglycidylether, sowie Glycidylether von Fettalkoholen, wie insbesondere C₈- bis C₁₀-Alkylglycidylether oder C₁₂- bis C₁₄-Alkylglycidylether, sowie Epoxysilane wie 3-Glycidoxypropyltrimethoxysilan, 3-Glycidoxypropyltriethoxysilan, 3-Glycidoxypropyldimethoxymethylsilan oder 3-Glycidoxypropyldiethoxymethylsilan;
- aromatische Monoepoxide, bevorzugt Styroloxid oder Glycidylether von Phenol, Kresol, tert.Butylphenol oder Cardanol;
- aliphatische oder cycloaliphatische, Ethergruppen-haltige Polyepoxide, bevorzugt Glycidylether von Glykolen wie Ethylenglykol, Propylenglykol, Butylenglykol, Hexandiol, Octandiol, Polypropylenglykolen, Dimethylolcyclohexan, Neopentylglykol, Rizinusöl, Trimethylolpropan, Trimethylolethan, Pentaerythrol, Glycerin, alkoxyliertes Glycerin oder alkoxyliertes Trimethylolpropan, sowie kernhydrierte Bisphenol-A-, -F- oder -A/F-Flüssigharze; oder
- aromatische Polyepoxide, bevorzugt Diglycidylether von Bisphenol-A, Bisphenol-F oder Bisphenol-A/F oder Novolak-Glycidylether, insbesondere in Form von sogenannten Flüssigharzen, wie sie im Handel beispielsweise von Dow, Huntsman oder Hexion erhältlich sind.

Als funktionelle Verbindung mit mindestens einer Aziridingruppe geeignet sind N-Alkylaziridine, insbesondere Michael-Addukte von Aziridin oder 2-Methylaziridin, bevorzugt Methyl 3-(aziridin-1-yl)propanoat, Methyl 3-(2-methylaziridin-1-yl)propanoat, Butyl 3-(aziridin-1-yl)propanoat, Butyl 3-(2-methylaziridin-1-yl)-propanoat, 2-Hydroxyethyl 3-(aziridin-1-yl)propanoat, 2-Hydroxyethyl 3-(2-methylaziridin-1-yl)propanoat, 1,1,1-Trimethylolpropan tris(3-(aziridin-1-yl)propanoat), 1,1,1-Trimethylolpropan tris(3-(2-methylaziridin-1-yl)propanoat), Pentaerythritol tris(3-(aziridin-1-yl)propanoat), Pentaerythritol tris(3-(2-methylaziridin-1-yl)propanoat), Pentaerythritol tetrakis(3-(aziridin-1-yl)propanoat) oder Pentaerythritol tetrakis(3-(2-methylaziridin-1-yl)propanoat).

Als funktionelle Verbindung mit mindestens einer Carbonatgruppe geeignet sind Dialkylcarbonate, bevorzugt Dimethylcarbonat, sowie insbesondere cyclische Carbonate, bevorzugt Ethylencarbonat, 1,2-Propylencarbonat, 4-Ethyl-1,3-dioxolan-2-on, 1,3-Dioxan-2-on oder 5,5-Diethyl-1,3-dioxan-2-on, oder durch Insertion von CO₂ in die Epoxidgruppe(n) der oben genannten funktionellen Verbindungen mit mindestens einer Epoxidgruppe erhältliche cyclische Carbonate. Besonders bevorzugt ist 1,2-Propylencarbonat.

Als funktionelle Verbindung mit mindestens einer Carbonsäureanhydrid-Gruppe geeignet sind Anhydride von Monocarbonsäuren, bevorzugt Essigsäureanhydrid, sowie insbesondere cyclische Anhydride von Dicarbonsäuren oder Polycarbonsäuren, bevorzugt Bernsteinsäureanhydrid, Maleinsäureanhydrid, Hexahydrophthalsäureanhydrid, Methylhexahydrophthalsäureanhydrid, Tetrahydrophthalsäureanhydrid, Phthalsäureanhydrid, Methylphthalsäureanhydrid, Trimellitsäureanhydrid, Pyromellitsäuredianhydrid oder 4,4'-[(lsopropyliden)-bis(p-phenylenoxy)]diphthalsäuredianhydrid.

Als funktionelle Verbindung mit mindestens einer Carbonsäureester-Gruppe geeignet sind insbesondere
- Alkylester von aliphatischen, cycloaliphatischen und arylaliphatischen Monocarbonsäuren, bevorzugt von Ameisensäure, Essigsäure, Propionsäure, Buttersäure, Isobuttersäure, Valeriansäure, Capronsäure, 2-Ethyl-capronsäure, Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Cyclohexancarbonsäure oder Phenylessigsäure, sowie Gemische aus gesättigten und/oder einfach und/oder mehrfach ungesättigten Fettsäuren, wie sie bei der Verseifung natürlicher Fette und Öle pflanzlichen oder tierischen Ursprungs erhalten werden;
- Alkylester von aromatischen Monocarbonsäuren, bevorzugt von Benzoesäure, Toluylsäure, Salicylsäure, Anissäure oder Naphthoesäure;
- Dialkylester von aliphatischen und cycloaliphatischen Dicarbonsäuren (sogenannte dibasische Ester), bevorzugt von Oxalsäure, Malonsäure, Bernsteinsäure, Glutarsäure, Adipinsäure, Pimelinsäure, Korksäure, Azelainsäure, Sebacinsäure, 1,12-Dodecandisäure, Hexahydrophthalsäure, Hexahydroisophthalsäure, Methylhexahydrophthalsäure, Hexahydroterephthalsäure, Dimerfettsäuren, 3,6,9-Trioxaundecandisäure oder von ähnlichen Derivaten von Polyethylenglykol;
- Dialkylester von aromatischen Dicarbonsäuren, bevorzugt von Phthalsäure, Isophthalsäure oder Terephthalsäure;
- Ester von tri- oder mehrfunktionellen Carbonsäuren, bevorzugt von Citronensäure oder Trimellithsäure.

Besonders bevorzugt sind dabei die Methyl- oder die Ethylester.

Als funktionelle Verbindung mit mindestens einer Lactongruppe geeignet sind β-, γ-, δ- oder ε-Lactone, bevorzugt β-Butyrolacton, γ-Butyrolacton, γ-Valerolacton, γ-Caprolacton, γ-Heptalacton, γ-Octalacton, γ-Nonalacton, γ-Decalacton, γ-Undecalacton, γ-Dodecalacton, δ-Valerolacton, δ-Caprolacton, δ-Heptalacton, δ-Octalacton, δ-Nonalacton, δ-Decalacton, δ-Undecalacton, δ-Dodecalacton, ε-Caprolacton, ε-Heptalacton, ε-Octalacton, ε-Nonalacton, ε-Decalacton, ε-Undecalacton oder ε-Dodecalacton. Insbesondere geeignet sind γ-, δ- oder ε-Lactone, bevorzugt γ-Butyrolacton, γ-Valerolacton, γ-Caprolacton, γ-Octalacton, γ-Nonalacton, γ-Decalacton, γ-Undecalacton, γ-Dodecalacton, δ-Valerolacton, δ-Caprolacton, δ-Nonalacton, δ-Decalacton, δ-Undecalacton, δ-Dodecalacton, ε-Caprolacton, ε-Decalacton, ε-Undecalacton oder ε-Dodecalacton. Besonders bevorzugt sind γ-Butyrolacton, γ-Valerolacton, δ-Valerolacton, δ-Caprolacton oder ε-Caprolacton.

Als funktionelle Verbindung mit mindestens einer Ketogruppe geeignet sind insbesondere
- aliphatische, cycloaliphatische oder aromatische Ketone, bevorzugt Aceton, Methylethylketon, Methylpropylketon, Methylisopropylketon, Methylisobutylketon, Methylpentylketon, Methylisopentylketon, Diethylketon, Dipropylketon, Diisopropylketon, Dibutylketon, Diisobutylketon, Cyclopentanon, Cyclohexanon, Acetophenon, Propiophenon oder Benzophenon;
- Diketone, bevorzugt 2,3-Butandion, 2,3-Pentandion, 2,3-Hexandion, 3,4-Hexandion, 2,5-Hexandion, 3,4-Dimethyl-2,5-hexandion, 1,2-Dibenzoylethan, 1,4-Bis-(2-furyl)-1,4-butandion, 2-(2-Oxopropyl)cyclopentanon, 1,2-Diacetylbenzol, 1,3-Diacetylbenzol, 1,4-Diacetylbenzol, 1,2-Diacetylcyclohexan, 1,3-Diacetylcyclohexan oder 1,4-Diacetylcyclohexan;
- Triketone, bevorzugt 1,3,5-Triacetylbenzol oder 1,3,5-Triacetylcyclohexan. Als funktionelle Verbindung mit mindestens einer Aldehydgruppe geeignet sind insbesondere
- aliphatische, cycloaliphatische oder aromatische Aldehyde, bevorzugt Formaldehyd, Acetaldehyd, Propanal, 2-Methylpropanal, 2,2-Dimethylpropanal, 2,2-Dimethyl-3-phenylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethylhexanal, Heptanal, Octanal, Nonanal, Decanal, Undecanal, 2-Methylundecanal, Dodecanal, Methoxyacetaldehyd, Cyclopropancarboxaldehyd, Cyclopentancarboxaldehyd, Cyclohexancarboxaldehyd, Diphenylacetaldehyd, Benzaldehyd, die isomeren Tolualdehyde, 4-Ethyl- oder 4-Propyl- oder 4-Isopropyl oder 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- oder Trialkoxybenzaldehyde, 2-, 3- oder 4-Nitrobenzaldehyd, 2-, 3- oder 4-Formylpyridin, Furfural, 2-Thiophencarbaldehyd, 1- oder 2-Naphthylaldehyd, 3- oder 4-Phenyloxybenzaldehyd, Chinolin-2-carbaldehyd oder dessen 3-, 4-, 5-, 6-, 7- oder 8-Stellungsisomere, Anthracen-9-carbaldehyd, Zimtaldehyd oder substituierte Zimtaldehyde;
- Hydroxylgruppen aufweisende Aldehyde, bevorzugt 2,2-Dimethyl-3-hydroxypropanal, 3-Bis(2-hydroxyethyl)amino-2,2-dimethylpropanal, 3-Bis(2-hydroxypropyl)amino-2,2-dimethylpropanal, die isomeren Salicylaldehyde oder Vanillin;
- Estergruppen aufweisende Aldehyde, bevorzugt 2,2-Dimethyl-3-formoxypropanal, 2,2-Dimethyl-3-acetoxypropanal, 2,2-Dimethyl-3-isobutoyloxypropanal, 2,2-Dimethyl-3-caproyloxypropanal, 2,2-Dimethyl-3-(2-ethylhexoyloxy)-propanal, 2,2-Dimethyl-3-capryloyloxypropanal, 2,2-Dimethyl-3-caprinoyloxypropanal, 2,2-Dimethyl-3-lauroyloxypropanal, 2,2-Dimethyl-3-myristoyloxypropanal, 2,2-Dimethyl-3-palmitoyloxypropanal, 2,2-Dimethyl-3-stearoyloxypropanal, 2,2-Dimethyl-3-oleyloxypropanal, 2,2-Dimethyl-3-benzoyloxypropanal oder Glyoxylsäuremethyl- oder -ethylester;
- Ethergruppen aufweisende Aldehyde, bevorzugt 2,2-Dimethyl-3-phenoxypropanal, 3-Cyclohexyloxy-2,2-dimethylpropanal, 2,2-Dimethyl-3-(2-ethylhexyloxy)-propanal, 2,2-Dimethyl-3-lauroxy-propanal oder 2,2-Dimethyl-3-stearoxypropanal;
- tertiäre Aminogruppen aufweisende Aldehyde, bevorzugt 2,2-Dimethyl-3-(N,N-dimethylamino)-propanal, 2,2-Dimethyl-3-(N,N-diethylamino)-propanal, 2,2-Dimethyl-3-(N,N-dibutylamino)-propanal, 2,2-Dimethyl-3-(N-pyrrolidino)-propanal, 2,2-Dimethyl-3-(N-piperidino)-propanal, 2,2-Dimethyl-3-(N-morpholino)-propanal, 3-(N-(2,6-dimethylmorpholino))-propanal, 3-Bis(methoxyethyl)amino-2,2-dimethylpropanal oder 3-Bis(2-hydroxypropyl)amino-2,2-dimethylpropanal;
- Dialdehyde, bevorzugt Glyoxal, Glutaraldehyd, ortho-Phthalaldehyd, Isophthalaldehyd, Terephthalaldehyd, Naphthalindicarboxaldehyd, Anthracendicarboxaldehyd, 2,5-Furandicarbaldehyd, 2,5-Thiophendicarbaldehyd, Cyclopentandicarbaldehyd, 1,2-Cyclohexandicarbaldehyd, 1,3-Cyclohexandicarbaldehyd, 1,4-Cyclohexandicarbaldehyd, 2(3),5(6)-Diformyl-bicyclo[2.2.1]-heptan (Norbornandicarbaldehyd), 3(4),8(9)-Diformyl-tricyclo[5.2.1.02,6]decan (Tricyclodecandicarbaldehyd oder TCD-Dialdehyd), 2,5-Tetrahydrofurandicarbaldehyd, 2,5-Tetrahydrothiophendicarbaldehyd, 1,3-Bis(4,4-dimethyl-5-oxo-2-pentyl)benzol, 1,4-Bis(4,4-dimethyl-5-oxo-2-pentyl)benzol, 3-(3-Oxopropyl)cyclohexancarbaldehyd, 4-(3-Oxopropyl)cyclohexancarbaldehyd, 3-(1-Formylethyl)cyclohexancarbaldehyd, 4-(1-Formylethyl)cyclohexancarbaldehyd, N,N'-Bis(2,2-dimethyl-3-oxopropyl)piperazin, N,N'-Bis(2,2-diethyl-3-oxopropyl)piperazin, N,N'-Bis(2-methyl-2-propyl-3-oxopropyl)piperazin oder N,N'-Bis(2-butyl-2-ethyl-3-oxopropyl)piperazin;
- Trialdehyde, bevorzugt 1,3,5-Benzoltricarbaldehyd oder 1,3,5-Cyclohexantricarbaldehyd.

Als funktionelle Verbindung mit mindestens einer 1,3-Diketogruppe bevorzugt sind 2,4-Pentandion, 3,5-Heptandion, 6-Methyl-3,5-heptandion, 2,2,6,6-Tetramethyl-3,5-heptandion, 2,2,4,6,6-Pentamethyl-3,5-heptandion, 1,3-Diphenyl-1,3-propandion, 3-Phenyl-2,4-pentandion, 2-Acetylcyclopentanon oder 2-Acetylcyclohexanon.

Als funktionelle Verbindung mit mindestens einer 1,3-Ketoestergruppe bevorzugt sind Methylacetoacetat, Ethylacetoacetat, Propylacetoacetat, Isopropylacetoacetat, Butylacetoacetat, tert.Butylacetoacetat, Ethyl-3-oxo-valerat oder Ethyl-3-oxo-hexanoat, oder mehrfunktionelle Acetoacetate aus der mehrfachen Veresterung von Polyolen, bevorzugt Ethylenglykol-bis(acetoacetat), Propylenglykol-bis(acetoacetat), Diethylenglykol-bis(acetoacetat), Dipropylenglykol-bis-(acetoacetat), 1,3-Propandiol-bis(acetoacetat), 1,4-Butandiol-bis(acetoacetat), 1,5-Pentandiol-bis(acetoacetat), 3-Methyl-1,5-pentandiol-bis(acetoacetat), 1,6-Hexandiol-bis(acetoacetat), 2,2(4),4-Trimethyl-1,6-hexandiol-bis(acetoacetat), Poly(oxyalkylen)-bis(acetoacetate), 1,3-Cyclohexandimethanol-bis(acetoacetat), 1,4-Cyclohexandiol-bis(acetoacetat), Glycerin-tris(acetoacetat) oder Trimethylolpropan-tris(acetoacetat).

Als funktionelle Verbindung mit mindestens einer 1,3-Ketoamidgruppe bevorzugt sind N,N-Diethyl-3-oxo-butanamid, N,N-Dibutyl-3-oxo-butanamid, N,N-Bis(2-ethylhexyl)-3-oxo-butanamid, N,N-Bis(2-methoxyethyl)-3-oxo-butanamid, N,N-Dibutyl-3-oxo-heptanamid, N,N-Bis(2-methoxyethyl)-3-oxo-heptanamid, N,N-Bis(2-ethylhexyl)-2-oxo-cyclopentancarboxamid, N,N-Dibutyl-3-oxo-3-phenylpropanamid oder N,N-Bis(2-methoxyethyl)-3-oxo-3-phenylpropanamid, oder mehrfunktionelle Ketoamide aus der mehrfachen Amidierung von Polyetheraminen mit Diketen oder einem 1,3-Ketoester.

Als funktionelle Verbindung mit mindestens einer Cyanatgruppe geeignet sind insbesondere Cyansäureester von Phenolen oder Polyphenolen, bevorzugt Phenylcyanat, 2,2-Bis(4-cyanatophenyl)propan (Bisphenol A-Dicyanat), Bis(4-cyanatophenyl)methan, Bis(4-cyanato-3,5-dimethylphenyl)methan, 1,1-Bis(4-cyanatophenyl)ethan, Bis(4-cyanatophenyl)dicyclopentadien, m-Phenylendicyanat, p-Phenylendicyanat, 4,4'-Dicyanatodiphenylsulfon, 1,3,5-Tricyanatobenzol, Novolak-Cyanate, Cyanate von Ester-modifizierten Bisphenolen, insbesondere von Caprolacton-modifizierten Bisphenolen, sowie Cyanatgruppen aufweisende Polymere der genannten Polycyanate mit Polyolen, insbesondere Polyether- oder Polyesterpolyolen.

Als funktionelle Verbindung mit mindestens einer Isocyanatgruppe geeignet sind insbesondere
- aliphatische oder cycloaliphatische oder aromatische Monoisocyanate, bevorzugt Butylisocyanat, Hexylisocyanat, Laurylisocyanat, Stearylisocyanat, Cyclohexylisocyanat, Allylisocyanat oder Phenylisocyanat, sowie 3-Isocyanatopropyltrimethoxysilan, 3-Isocyanatopropyltriethoxysilan, 3-Isocyanatopropyldimethoxymethylsilan oder 3-Isocyanatopropyldiethoxymethylsilan;
- aliphatische oder cycloaliphatische Di- oder Triisocyanate, bevorzugt 1,4-Tetramethylendiisocyanat, 2-Methylpentamethylen-1,5-diisocyanat, 1,6-Hexamethylendiisocyanat (HDI), 2,2,4- und/oder 2,4,4-Trimethyl-1,6-hexamethylendiisocyanat (TMDI), 1,10-Decamethylendiisocyanat, 1,12-Dodecamethylendiisocyanat, Lysin- oder Lysinesterdiisocyanat, Cyclohexan-1,3- oder -1,4-diisocyanat, 1-Methyl-2,4- und/oder -2,6-diisocyanatocyclohexan (H₆TDI), 1-Isocyanato-3,3,5-trimethyl-5-isocyanatomethyl-cyclohexan (IPDI), Perhydro-2,4'- und/oder -4,4'-diphenylmethandiisocyanat (H₁₂MDI), 1,3- oder 1,4-Bis-(isocyanatomethyl)cyclohexan, m- oder p-Xylylendiisocyanat (m- oder p-XDI), Tetramethyl-1,3- oder -1,4-xylylendiisocyanat (m- oder p-TMXDI), Bis-(1-Isocyanato-1-methylethyl)naphthalin, Dimer- oder Trimerfettsäureisocyanate wie insbesondere 3,6-Bis-(9-isocyanatononyl)-4,5-di-(1-heptenyl)cyclohexen (Dimeryldiisocyanat); besonders bevorzugt HDI oder IPDI;
- aromatische Di- oder Triisocyanate, bevorzugt 2,4- und/oder 2,6-Toluylendiisocyanat (TDI), 4,4'- und/oder 2,4'- und/oder 2,2'-Diphenylmethandiisocyanat (MDI), Gemische aus MDI und MDI-Homologen (polymeres MDI oder PMDI), 1,3- oder 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan oder Tris-(4-isocyanatophenyl)thiophosphat; besonders bevorzugt MDI oder TDI;
- Oligomere und Derivate der genannten Di- und Triisocyanate, bevorzugt abgeleitet von HDI, IPDI, MDI oder TDI. Davon insbesondere geeignet sind im Handel erhältliche Typen, bevorzugt HDI-Biurete, HDI-Isocyanurate, HDI-Uretdione, HDI-Iminooxadiazindione, HDI-Allophanate, IPDI-Isocyanurate, TDI-Oligomere oder gemischte Isocyanurate auf Basis TDI/HDI, oder bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, Gemische aus MDI und MDI-Homologen (polymeres MDI oder PMDI). Solche oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.
- Isocyanatgruppen-haltige Polyurethanpolymere aus der Umsetzung von Polyolen, insbesondere Polyetherpolyolen, mit Polyisocyanaten, wie nachfolgend beschrieben.

Bevorzugt weist die funktionelle Verbindung mit mindestens einer Isocyanatgruppe aliphatische Isocyanatgruppen auf, insbesondere abgeleitet von IPDI oder HDI. Diese Isocyanatgruppen weisen eine moderate Reaktivität auf, was die Umsetzung mit dem Amidin der Formel (I) erleichtert.

Ein geeignetes Isocyanatgruppen-haltiges Polyurethanpolymer wird bevorzugt erhalten aus der Umsetzung von Polyolen mit einer überstöchiometrischen Menge an Polyisocyanaten, insbesondere Diisocyanaten. Die Umsetzung wird bevorzugt unter Feuchtigkeitsausschluss bei einer Temperatur im Bereich von 50 °C bis 100 °C durchgeführt, gegebenenfalls in Anwesenheit geeigneter Katalysatoren. Der Überschuss an Polyisocyanat wird bevorzugt so gewählt, dass im Polyurethanpolymer nach der Umsetzung aller Hydroxylgruppen ein Gehalt an freien Isocyanatgruppen im Bereich von 0.5 bis 20 Gewichts-%, bevorzugt 0.5 bis 10 Gewichts-%, besonders bevorzugt 0.5 bis 5 Gewichts-%, bezogen auf das gesamte Polymer, verbleibt.

Ein geeignetes Isocyanatgruppen-haltiges Polyurethanpolymer weist bevorzugt ein mittleres Molekulargewicht im Bereich von 500 bis 20'000 g/mol auf. Geeignete Polyisocyanate sind insbesondere Diisocyanate, bevorzugt 1,6-Hexamethylendiisocyanat (HDI), 1-Isocyanato-3,3,5-trimethyl-5-isocyanatomethylcyclohexan (Isophorondiisocyanat oder IPDI), 2,4- und/oder 2,6-Toluylendiisocyanat (TDI) oder 4,4'-, 2,4'- und/oder 2,2'-Diphenylmethandiisocyanat (MDI). Geeignete Polyole sind insbesondere Polyetherpolyole, bevorzugt Polyoxyalkylenpolyole, welche Polymerisationsprodukte von Ethylenoxid oder 1,2-Propylenoxid oder 1,2- oder 2,3-Butylenoxid oder Oxetan oder Tetrahydrofuran oder Mischungen davon sind, eventuell polymerisiert mit Hilfe eines Startermoleküls mit zwei oder mehreren aktiven Wasserstoffatomen; Polyesterpolyole, bevorzugt Produkte aus der Polykondensation von Diolen oder Triolen mit Lactonen oder Dicarbonsäuren oder deren Ester oder Anydriden; Polycarbonatpolyole, OH-endständige Blockcopolymere mit mindestens zwei unterschiedlichen Blöcken mit Polyether-, Polyester- oder Polycarbonat-Einheiten; Polyacrylat- oder Polymethacrylat-Polyole; Polyhydroxy-funktionelle Fette oder Öle, insbesondere natürliche Fette oder Öle; oder Polykohlenwasserstoffpolyole wie beispielsweise Polyhydroxy-funktionelle Polyolefine.

Weiterhin geeignete Polyole sind niedrigmolekulare zwei- oder mehrwertige Alkohole, bevorzugt 1,2-Ethandiol, 1,2-Propandiol, Neopentylglykol, Dibromoneopentylglykol, Diethylenglykol, Triethylenglykol, die isomeren Dipropylenglykole oder Tripropylenglykole, die isomeren Butanediole, Pentandiole, Hexandiole, Heptandiol, Octandiole, Nonandiole, Decandiole, Undecandiol, 1,3- oder 1,4-Cyclohexandimethanol, hydriertes Bisphenol A, Dimerfettsäurealkohole, 1,1,1-Trimethylolethan, 1,1,1-Trimethylolpropan, Glycerin, Pentaerythritol, Zuckeralkohole oder Zucker, oder niedrigmolekulare Alkoxylierungsprodukte der genannten zwei- oder mehrwertige Alkohole.

Geeignet sind insbesondere auch Mischungen der genannten Polyole. Geeignet sind insbesondere Diole oder Triole oder Mischungen davon.

Als funktionelle Verbindung mit mindestens einer Isothiocyanatgruppe geeignet sind insbesondere Methylisothiocyanat, Ethylisothiocyanat, Propylisothiocyanat, Isopropylisothiocyanat, n-Butylisothiocyanat, 2-Isothiocyanatobutan, Cyclohexylisothiocyanat, n-Octylisothiocyanat, Allylisothiocyanat, Phenylisothiocyanat, o- oder m- oder p-Tolylisothiocyanat, 1,2- oder 1,3- oder 1,4-Phenylendiisothiocyanat oder 2,4- und/oder 2,6-Toluylendiisothiocyanat.

Als funktionelle Verbindung mit mindestens einer Acrylat- oder Methacrylatgruppe geeignet sind insbesondere
- Acrylsäureester oder Methacrylsäureester, bevorzugt Methyl (meth)acrylat, Ethyl (meth)acrylat, Butyl (meth)acrylat, 2-Ethylhexyl (meth)acrylat, Lauryl (meth)acrylat, Stearyl (meth)acrylat, Cyclohexyl (meth)acrylat, Tetrahydrofuryl (meth)acrylat, Isobornyl (meth)acrylat, 2-Phenoxyethyl (meth)acrylat, 2-(2-Phenoxyethoxy)ethayl (meth)acrylat, 2-(4-Nonylphenoxy)ethyl (meth)-acrylat, oder 3-(Meth)acryloxypropyltrimethoxysilan, 3-(Meth)acryloxypropyltriethoxysilan, 3-Meth)acryloxypropyldimethoxymethylsilan oder 3-(Meth)-acryloxypropyldiethoxymethylsilan;
- zwei- oder mehrwertige Acrylate oder Methacrylate von aliphatischen Polyethern, Polyestern, Novolaken, Phenolen, aliphatischen oder cycloaliphatischen Alkoholen, Glykolen, Polyesterglykolen oder mono- oder polyalkoxylierten Derivaten der vorgenannten Verbindungen, bevorzugt Ethylenglykoldi(meth)acrylat, Tetraethylenglykol-di(meth)acrylat, Tripropylenglykol-di-(meth)acrylat, Polyethylenglykol-di(meth)acrylat, Polypropylenglykol-di-(meth)acrylat, 1,4-Butandiol-di(meth)acrylat, 1,6-Hexandiol-di(meth)acrylat, Neopentylglykol-di(meth)acrylat, Trimethylolpropan-tri(meth)acrylat, Pentaerythritol-tetra(meth)acrylat, Dipentaerythritol-tetra(meth)acrylat, Dipentaerythritol-penta(meth)acrylat, Dipentaerythritol-hexa(meth)acrylat; zwei- oder mehrwertige acryl- oder methacrylfunktionelle Polybutadiene, Polyisoprene oder Block-copolymere davon; Addukte aus zwei- oder mehrwertigen Epoxiden wie die bereits genannten mit Acrylsäure oder Methacrylsäure; zwei- oder mehrwertige Polyurethanacrylate oder -methacrylate, insbesondere Umsetzungsprodukte aus Isocyanatgruppen-haltigen Polyurethanpolymeren mit 2-Hydroxyethylacrylat; Tris-(2-hydroxyethyl)isocyanurat-tri(meth)acrylat oder Tris-(2-hydroxyethyl)cyanurat-tri(meth)acrylat. Als funktionelle Verbindung mit mindestens einer Acrylamid- oder Methacrylamidgruppe geeignet sind insbesondere
- Acrylamid, Methacrylamid oder N-substituierte Acrylamide oder Methacrylamide, bevorzugt N,N-Dimethylacrylamid, N,N-Diethylacrylamid,N-Methylacrylamid, N-Ethylacrylamid, N-Propylacrylamid, N-Isopropylacrylamid, N-Butylacrylamid, N-tert.Butylacrylamid, N,N-Dimethylaminopropylacrylamid, N-Hydroxymethylacrylamid, N-Hydroxyethylacrylamid, N-Hydroxypropylacrylamid, N-Butoxymethylacrylamid, N-Isobutoxymethylacrylamid oder Diacetonacrylamid;
- zwei- oder mehrwertige Acrylamide oder Methacrylamide, bevorzugt N,N'-Methylen-bis(acrylamid), N,N'-Ethylen-bis(acrylamid) oder N,N',N"-Tris-((meth)acryloyl)perhydrotriazin.

Als funktionelle Verbindung mit mindestens einer Acrylnitril- oder Methacrylnitrilgruppe geeignet sind insbesondere Acrylnitril oder Methacrylnitril. Bevorzugt ist Acrylnitril.

Als funktionelle Verbindung mit mindestens einer Maleatgruppe geeignet sind insbesondere Dialkylmaleate, bevorzugt Maleinsäuredimethylester, Maleinsäurediethylester oder Maleinsäuredibutylester.

Als funktionelle Verbindung mit mindestens einer Fumaratgruppe geeignet sind insbesondere Dialkylfumarate, bevorzugt Fumarsäuredimethylester, Fumarsäurediethylester oder Fumarsäuredibutylester.

Als funktionelle Verbindung mit mindestens einer Maleimidgruppe geeignet sind insbesondere Maleimid sowie N-Alkylmaleimide, bevorzugt N-Methylmaleimid, N-Ethylmaleimid, N-Butylmaleimid, N-Hexylmaleimid oder 1,1-(1,6-Hexylen)-bis(1H-pyrrol-2,5-dion).

Als funktionelle Verbindung mit mindestens einer Itaconatgruppe geeignet sind insbesondere Dialkylitaconate, bevorzugt Itaconsäuredimethylester, Itaconsäurediethylester, Itaconsäuredibutylester oder Itaconsäuredihexylester.

Besonders bevorzugt ist die funktionelle Verbindung ausgewählt aus der Gruppe bestehend aus 2-Ethylhexylglycidylether, C₈- bis C₁₀-Alkylglycidylether, C₁₂-bis C₁₄-Alkylglycidylether, Kresylglycidylether, tert.Butylphenylglycidylether, Cardanol-Glycidylether, 1,4-Butandioldiglycidylether, 1,6-Hexandioldiglycidylether, Neopentylglykoldiglycidylether, Polypropylenglykoldiglycidylether, Bisphenol-A-Digylcidylether, Bisphenol-F-Digylcidylether, 3-Glycidoxypropyltrimethoxysilan, 3-Glycidoxypropyltriethoxysilan, 1,2-Propylencarbonat, Bernsteinsäureanhydrid, Maleinsäureanhydrid, Hexahydrophthalsäureanhydrid, Phthalsäureanhydrid, Capronsäuremethylester, Capronsäureethylester, 2-Ethylcapronsäuremethylester, 2-Ethylcapronsäureethylester, Laurinsäuremethylester, Laurinsäureethylester, Benzoesäuremethylester, Benzoesäureethylester, Adipinsäuredimethylester, Adipinsäurediethylester, Phthalsäuredimethylester, Phthalsäurediethylester, Isophthalsäuredimethylester, Isophthalsäurediethylester, Terephthalsäuredimethylester, Terephthalsäurediethylester, γ-Butyrolacton, γ-Valerolacton, δ-Valerolacton, δ-Caprolacton, ε-Caprolacton, Aceton, Methylethylketon, Methylisopropylketon, Methylisobutylketon, Cyclopentanon, Cyclohexanon, Acetophenon, 2,5-Hexandion, 2-Methylpropanal, 2-Ethylhexanal, Dodecanal, Benzaldehyd, 2,2-Dimethyl-3-acetoxypropanal, 2,2-Dimethyl-3-lauroyloxypropanal, 2,2-Dimethyl-3-(N-morpholino)-propanal, 3-Bis(methoxyethyl)amino-2,2-dimethylpropanal, 3-Bis(2-hydroxypropyl)amino-2,2-dimethylpropanal, Terephthalaldehyd, 2,4-Pentandion, Methylacetoacetat, Ethylacetoacetat, Isopropylacetoacetat, tert.Butylacetoacetat, Ethylenglykol-bis(acetoacetat), Propylenglykol-bis(acetoacetat), Diethylenglykol-bis(acetoacetat), Dipropylenglykol-bis(acetoacetat), 1,3-Propandiol-bis(acetoacetat), 1,4-Butandiol-bis-(acetoacetat), 1,5-Pentandiol-bis(acetoacetat), 3-Methyl-1,5-pentandiol-bis-(acetoacetat), 1,6-Hexandiol-bis(acetoacetat), 2,2(4),4-Trimethyl-1,6-hexandiol-bis(acetoacetat), N,N-Dimethyl-3-oxo-butanamid, N,N-Diethyl-3-oxo-butanamid, N,N-Dibutyl-3-oxo-butanamid, N,N-Bis(2-ethylhexyl)-3-oxo-butanamid, N,N-Bis(2-methoxyethyl)-3-oxo-butanamid, Butylisocyanat, Hexylisocyanat, Laurylisocyanat, Stearylisocyanat, Cyclohexylisocyanat, Phenylisocyanat, 3-Isocyanatopropyltrimethoxysilan, 3-Isocyanatopropyltriethoxysilan, Isocyanatgruppen-haltige Polyurethanpolymeren aus der Umsetzung von Polyolen mit Diisocyanaten, Methylisothiocyanat, Ethylisothiocyanat, Isopropylisothiocyanat, Butylisothiocyanat, Cyclohexylisothiocyanat, Phenylisothiocyanat, Butyl(meth)-acrylat, 2-Ethylhexyl(meth)acrylat, Ethylenglykol-di(meth)acrylat, Tetraethylenglykol-di(meth)acrylat, Tripropylenglykol-di(meth)acrylat, Polyethylenglykol-di-(meth)acrylat, Polypropylenglykol-di(meth)acrylat, 1,4-Butandiol-di(meth)acrylat, 1,6-Hexandiol-di(meth)acrylat, Neopentylglykol-di(meth)acrylat, Trimethylolpropan-tri(meth)acrylat, Acrylnitril, Maleinsäurediethylester, Fumarsäurediethylester, N-Ethylmaleimid und Itaconsäurediethylester.

Das Umsetzungsprodukt von mindestens einem Amidin der Formel (I a) mit mindestens einer der beschriebenen funktionellen Verbindungen wird bevorzugt dadurch erhalten, dass die HX-Gruppen ungefähr stöchiometrisch in Bezug auf die Reaktivgruppen der funktionellen Verbindung eingesetzt werden, wodurch das erhaltene Umsetzungsprodukt weitgehend frei von den genannten Reaktivgruppen ist. Die Umsetzung kann aber auch unter- oder überstöchiometrisch geführt werden. Insbesondere bei Einsatz einer funktionellen Verbindung, welche mehr als eine der genannten Reaktivgruppen enthält, kann eine unterstöchiometrische Umsetzung der Reaktivgruppen vorteilhaft sein, da das Umsetzungsprodukt aufgrund der enthaltenen Reaktivgruppen eine zusätzliche Funktionalität aufweist, die beispielsweise zu dessen Einbindung in die Polymermatrix oder dessen Verankerung auf ein Substrat oder einen Füllstoff dienen kann.

Eine 1,3-Diketon- oder 1,3-Ketoester- oder 1,3-Ketoamid- oder (Meth)acrylat- oder Maleat- oder Fumarat- oder Itaconat-Gruppe kann mit HX-Gruppen zweimal reagieren. Wird die Umsetzung stöchiometrisch so durchgeführt, dass pro solcher Gruppe nur eine HX-Gruppe vorhanden ist, so wird diese bevorzugt an die Ketogruppe kondensiert bzw. an die Doppelbindung addiert. Ist hingegen mehr als eine HX-Gruppe vorhanden, so kann zusätzlich eine Umesterung bzw. Amidierung erfolgen. Bevorzugt wird eine solche Gruppe nur einmal umgesetzt.

Die Umsetzung erfolgt insbesondere unter Bedingungen, wie sie für Reaktionen zwischen den an der jeweiligen Umsetzung beteiligten Reaktivgruppen typischerweise verwendet werden, bevorzugt bei einer Temperatur im Bereich von 0 °C bis 160 °C. Die Umsetzung kann unter Einsatz eines Lösemittels oder bevorzugt lösemittelfrei erfolgen. Gegebenenfalls können Hilfsstoffe wie beispielsweise Katalysatoren, Initiatoren, Trocknungsmittel oder Stabilisatoren mitverwendet werden.

Das aus dem beschriebenen Verfahren erhaltene Umsetzungsprodukt wird bevorzugt ohne Aufarbeitung oder Reinigung verwendet. Falls bei der Umsetzung aufgrund von Kondensationsreaktionen Abspalter entstehen, werden diese bevorzugt entfernt, insbesondere durch Destillation, gegebenenfalls unter Vakuum.

Das Umsetzungsprodukt von mindestens einem Amidin der Formel (I a) mit mindestens einer der beschriebenen funktionellen Verbindungen weist insbesondere die Formel (III) auf, 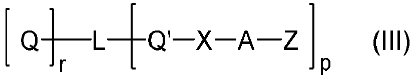 wobei
p für eine ganze Zahl von 1 bis 6 steht und r für eine ganze Zahl von 0 bis 5 steht, wobei (p+r) für eine ganze Zahl von 1 bis 6 steht,
L für
   einen (p+r)-wertigen Kohlenwasserstoffrest mit einem mittleren Molekulargewicht im Bereich von 14 bis 20'000 g/mol, welcher gegebenenfalls Heteroatome, insbesondere Sauerstoff oder Stickstoff oder Silicium in Form von Ether-, tertiären Amino-, Ester-, Amid-, Urethan-, Harnstoff-, Uretdion-, Isocyanurat-, Biuret-, Allophanat-, Uretonimin-, Iminooxadiazindion-, Oxadiazintrion- oder Alkoxysilan-Gruppen, aufweist,
   oder für einen (p+r+1)-wertigen Kohlenwasserstoffrest, welcher zusammen mit Q' einen gegebenenfalls substituierten 5- oder 6-gliedrigen Ring bildet, oder für eine kovalente Bindung,
   oder für einen Wasserstoff-Rest steht,
Q für eine Reaktivgruppe ausgewählt aus Epoxid, Aziridin, Carbonat, Carbonsäureanhydrid, Carbonsäure, Carbonsäureester, Lacton, Carbonsäurechlorid, Keton, Aldehyd, 1,3-Diketon, 1,3-Ketoester, 1,3-Ketoamid, Cyanat, Thiocyanat, Isocyanat, Isothiocyanat, (Meth)acrylat, (Meth)acrylamid, (Meth)acrylnitril, Maleat, Maleamid, Maleimid, Fumarat, Fumaramid, Itaconat, Itaconamid, Crotonat und Crotonamid steht, und
Q' für eine Verbindungseinheit entstanden aus der Reaktion von Q mit HX steht.

Q steht bevorzugt für Epoxid, Carbonat, Carbonsäureanhydrid, Carbonsäureester, Lacton, Keton, Aldehyd, 1,3-Diketon, 1,3-Ketoester, 1,3-Ketoamid, Cyanat, Isocyanat, Acrylat, Methacrylat, Acrylamid, Methacrylamid, Maleat, Maleimid, Fumarat oder Itaconat.

Q steht besonders bevorzugt für Epoxid, Carbonat, Carbonsäureester, Lacton, Keton, Aldehyd, 1,3-Diketon, 1,3-Ketoester, Isocyanat, Acrylat oder Methacrylat.

Die Epoxid-Gruppe stellt bevorzugt eine Glycidyl-Gruppe dar, insbesondere eine Glycidyloxy-Gruppe.

Die Aziridin-Gruppe stellt bevorzugt eine N-Aziridinyl-Gruppe dar.

Bevorzugt ist Q' ausgewählt aus der Gruppe bestehend aus 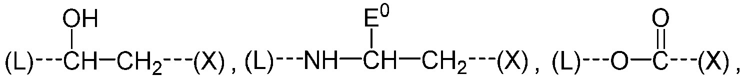 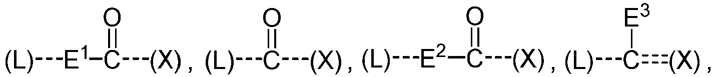 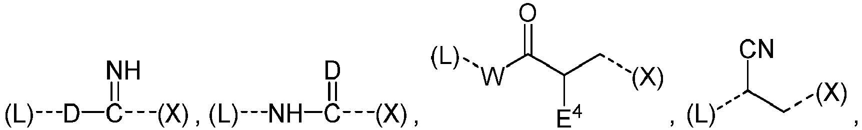 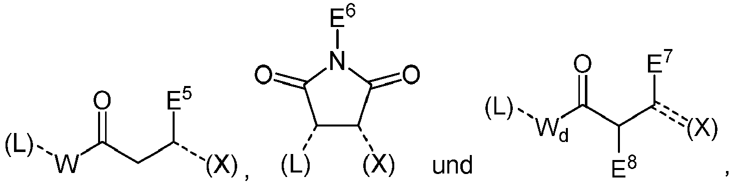 wobei
D für O oder S steht,
W für O oder NR¹⁰ und R¹⁰ für einen Wasserstoff-Rest oder für einen einwertigen Kohlenwasserstoffrest mit 1 bis 8 C-Atomen steht,
E⁰ für einen Wasserstoff-Rest oder für einen Methyl-Rest steht,
E¹ für einen Carboxyl-substituierten Alkylen-, Alkendiyl- oder Phenylen-Rest mit 2 bis 8 C-Atomen steht,
E² für einen Hydroxyalkylen-Rest mit 2 bis 5 C-Atomen oder für einen über O gebundenen Hydroxyalkylenoxy-Rest mit 2 oder 3 C-Atomen steht,
E³ für einen Wasserstoff-Rest oder für einen einwertigen Kohlenwasserstoffrest mit 1 bis 6 C-Atomen, welcher gegebenenfalls Heteroatome in Form von Ether-, Ester-, Amino- oder Amid-Gruppen aufweist, oder zusammen mit L für einen gegebenenfalls substituierten 1,4-Butylen- oder 1,5-Pentylen-Rest steht,
E⁴ für einen Wasserstoff- oder Methyl- oder Alkoxycarbonylmethyl-Rest mit 2 bis 9 C-Atomen steht,
E⁵ für einen Alkyoxycarbonyl-Rest mit 1 bis 8 C-Atomen oder für einen Methyl-Rest steht,
E⁶ für einen Wasserstoff-Rest oder für einen Alkyl-Rest mit 1 bis 8 C-Atomen steht,
E⁷ für einen einwertigen Kohlenwasserstoffrest mit 1 bis 6 C-Atomen steht,
E⁸ für einen Wasserstoff-Rest oder für einen einwertigen Kohlenwasserstoffrest mit 1 bis 6 C-Atomen steht, und
d für 0 oder 1 steht.

Bevorzugt steht D für O.

Bevorzugt steht W für O.

Bevorzugt steht E¹ für 2-Carboxy-1,2-ethylen, 2-Carboxy-1,2-ethendiyl, 3-Carboxy-1,3-propylen, 2-Carboxy-1,2-cyclohexylen oder 2-Carboxy-1,2-phenylen.

Bevorzugt steht E² für 1-Hydroxy-1,2-ethylen, 1-Hydroxy-1,3-propylen, 1-Hydroxy-1,4-butylen, 1-Hydroxy-1,5-pentylen, 2-Hydroxy-1,2-ethylenoxy oder 3-Hydroxy-1,3-propylenoxy.

Bevorzugt steht E³ für einen Wasserstoff-Rest oder für einen Methyl-Rest.

Bevorzugt steht E⁴ für einen Wasserstoff-Rest oder für Methyl, Methoxycarbonylmethyl, Ethoxycarbonylmethyl oder Butoxycarbonylmethyl, insbesondere für einen Wasserstoff-Rest oder für einen Methyl-Rest.

Bevorzugt steht E⁵ für Methoxycarbonyl, Ethoxycarbonyl oder Butoxycarbonyl oder für Methyl.

Bevorzugt steht E⁶ für einen Wasserstoff-Rest oder Methyl, Ethyl oder Butyl. Bevorzugt steht E⁷ für Methyl.

Bevorzugt steht E⁸ für einen Wasserstoff-Rest.

Bevorzugt steht p für 1 oder 2 oder 3.

Bevorzugt steht r für 0.

Bevorzugt steht (p+r) für 1 oder 2 oder 3.

Besonders bevorzugt stehen p für 1 oder 2 oder 3 und r für 0.

In einem bevorzugten Umsetzungsprodukt der Formel (III) steht p für p¹, r für 0, X für X², Q' für 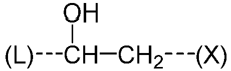 und L für L¹. Dieses weist somit die Formel (III a) auf, 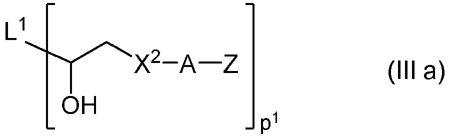 wobei
p¹ für eine ganze Zahl von 1 bis 4 steht,
L¹ für einen p¹-wertigen Kohlenwasserstoffrest mit einem mittleren Molekulargewicht im Bereich von 15 bis 1'500 g/mol, welcher insbesondere eine oder mehrere Ethergruppen und gegebenenfalls eine Alkoxysilangruppe aufweist, steht,
X² für NR⁷ steht,
und A, R⁷ und Z die beschriebenen Bedeutungen aufweisen.

Bevorzugt steht p¹ für 1 oder 2 oder 3, besonders bevorzugt für 1 oder 2.

Ein Umsetzungsprodukt der Formel (III a) wird insbesondere erhalten aus der Umsetzung von mindestens Amidin der Formel (I a), bei welchem X für X² steht, mit mindestens einer der beschriebenen funktionellen Verbindungen mit mindestens einer Epoxidgruppe. Die Umsetzung wird bevorzugt bei einer Temperatur im Bereich von 20 °C bis 140 °C, insbesondere 40 °C bis 120 °C, durchgeführt.

In einem weiteren bevorzugten Umsetzungsprodukt der Formel (III) steht p für p², r für 0, X für X¹, Q' für 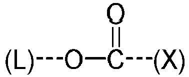 und L für L². Dieses weist somit die Formel (III b) auf, 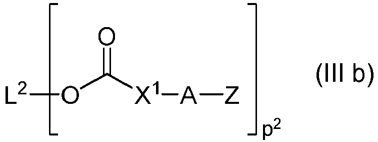 wobei
p² für 1 oder 2 steht,
X¹ für NR⁷ steht,
L² für einen Alkylrest mit 1 bis 18 C-Atomen steht,
und A, R⁷ und Z die beschriebenen Bedeutungen aufweisen.

Bevorzugt steht p² für 1.

Bevorzugt weist L² ein Molekulargewicht im Bereich von 45 bis 185 g/mol auf. Bevorzugt steht L² für einen Hydroxyalkyl-Rest mit 2 bis 8 C-Atomen. Besonders bevorzugt steht L² für 2-Hydroxyethyl, 2-Hydroxypropyl oder 3-Hydroxypropyl, insbesondere für 2-Hydroxypropyl.

Ein Umsetzungsprodukt der Formel (III b) wird insbesondere erhalten aus der Umsetzung von mindestens einem Amidin der Formel (I a), bei welchem X für NR⁷ steht, mit mindestens einem Dialkylcarbonat. Die Umsetzung wird bevorzugt bei einer Temperatur im Bereich von 20 °C bis 140 °C, insbesondere 40 °C bis 120 °C, durchgeführt und freigesetzte Alkohole oder Phenole werden bevorzugt während oder nach der Umsetzung entfernt, insbesondere durch Destillation unter Vakuum.

In einem weiteren bevorzugten Umsetzungsprodukt der Formel (III) steht p für p³, r für 0, X für X¹, Q' für 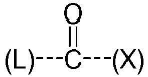 und L für L³. Dieses weist somit die Formel (III c) auf, 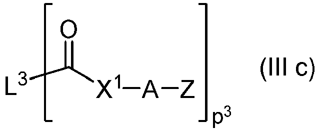 wobei
p³ für 1 oder 2 oder 3 steht,
X¹ für NR⁷ steht,
L³ für eine kovalente Bindung oder für einen Wasserstoff-Rest oder für einen p³-wertigen Kohlenwasserstoffrest mit einem mittleren Molekulargewicht im Bereich von 14 bis 500 g/mol, welcher gegebenenfalls ungesättigte Anteile und gegebenenfalls Ethergruppen oder Estergruppen aufweist, steht,
und A, R⁷ und Z die beschriebenen Bedeutungen aufweisen.

Bevorzugt steht p³ für 1 oder 2, insbesondere für 1.

Ein Umsetzungsprodukt der Formel (III c) wird insbesondere erhalten aus der Umsetzung von mindestens einem Amidin der Formel (I a), bei welchem X für NR⁷ steht, mit mindestens einer der beschriebenen funktionellen Verbindungen mit mindestens einer Carbonsäureester-Gruppe. Die Umsetzung wird bevorzugt bei einer Temperatur im Bereich von 20 °C bis 160 °C, insbesondere 40 °C bis 140 °C, durchgeführt. Die bei der Umsetzung entstehenden Abspalter in Form von Alkoholen oder Phenolen werden bevorzugt während oder nach der Umsetzung entfernt, insbesondere durch Destillation unter Vakuum.

In einem weiteren bevorzugten Umsetzungsprodukt der Formel (III) steht p für 1, r für 0, X für X¹, Q' für 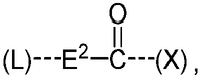 E² für CH(OH)-(CH₂)_{b} oder für CH(OH)-(CH₂)_{c}O und L für L⁴. Dieses weist somit die Formel (III d) oder (III e) auf, 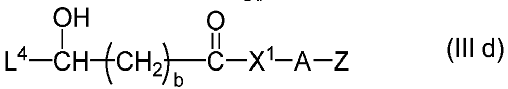 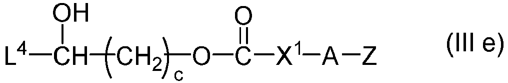 wobei
X¹ für O oder NR⁷ steht,
b für eine ganze Zahl im Bereich von 1 bis 4 steht,
c für 1 oder 2 steht,
L⁴ für einen Wasserstoff-Rest oder für einen linearen Alkylrest mit 1 bis 12 C-Atomen steht,
und A, R⁷ und Z die beschriebenen Bedeutungen aufweisen.

Bevorzugt steht b für 2 oder 3 oder 4.

Bevorzugt steht c für 1.

Im Fall von Formel (III d) steht L⁴ bevorzugt für einen Wasserstoff-Rest oder für einen linearen Alkylrest mit 1 bis 8 C-Atomen, insbesondere für einen Wasserstoff-Rest oder für einen Methylrest.

Im Fall von Formel (III e) steht L⁴ bevorzugt für einen Wasserstoff-Rest oder für einen Methyl-Rest, insbesondere für einen Methyl-Rest.

Ein Umsetzungsprodukt der Formel (III d) wird insbesondere erhalten aus der Umsetzung von mindestens einem Amidin der Formel (I a), bei welchem X für NR⁷ steht, mit mindestens einem der beschriebenen Lactone.

Ein Umsetzungsprodukt der Formel (III e) wird insbesondere erhalten aus der Umsetzung von mindestens einem Amidin der Formel (I a), bei welchem X für

NR⁷ steht, mit mindestens einem der beschriebenen cyclischen Carbonate.

Die Umsetzung wird bevorzugt bei einer Temperatur im Bereich von 20 °C bis 140 °C, insbesondere 40 °C bis 120 °C, durchgeführt.

In einem weiteren bevorzugten Umsetzungsprodukt der Formel (III) steht p für p⁵, r für 0, X für NH, Q' für 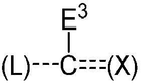 und L für L⁵. Dieses weist somit die Formel (III f) auf, 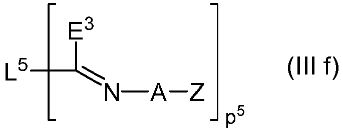 wobei
p⁵ für 1 oder 2 oder 3 steht,
L⁵ für einen einwertigen Kohlenwasserstoff-Rest mit 1 bis 20 C-Atomen steht, welcher gegebenenfalls Heteroatome, insbesondere Sauerstoff oder Stickstoff in Form von Estergruppen, Amidgruppen, Ethergruppen oder tertiären Amino-gruppen, enthält, oder zusammen mit E³ für einen gegebenenfalls substituierten 1,4-Butylen- oder 1,5-Pentylen-Rest steht,
und A und Z die beschriebenen Bedeutungen aufweisen.

Bevorzugt steht p⁵ für 1 oder 2, insbesondere für 1.

Bevorzugt steht E³ für einen Wasserstoff-Rest oder für einen Methyl-Rest. Für den Fall, dass E³ für einen Wasserstoff-Rest steht, steht L⁵ bevorzugt für Prop-2-yl, Hept-3-yl, Undec-1-yl, Phenyl, 1,1-Dimethyl-2-acetoxyeth-1-yl, 1,1-Dimethyl-2-lauroyloxyeth-1-yl, 1,1-Dimethyl-2-(N-morpholino)eth-1-yl, 2-Bis-(methoxyethyl)amino-1,1-dimethyleth-1-yl oder 2-Bis(2-hydroxypropyl)amino-1,1-dimethyleth-1-yl.

Für den Fall, dass E³ für einen Methyl-Rest steht, steht L⁵ bevorzugt für Methyl, Ethyl, Prop-2-yl, 2-Methylprop-1-yl, Benzyl.

Ein Umsetzungsprodukt der Formel (III f) wird insbesondere erhalten aus der

Umsetzung von mindestens einem Amidin der Formel (I a), bei welchem X für NH steht, mit mindestens einer der beschriebenen funktionellen Verbindungen mit mindestens einer Keton- oder Aldehydgruppe. Die Umsetzung wird bevorzugt bei einer Temperatur im Bereich von 0 °C bis 120 °C, insbesondere 20 °C bis 100 °C, durchgeführt. Das bei der Umsetzung entstehende Wasser wird bevorzugt während oder nach der Umsetzung entfernt, insbesondere durch Azeotropdestillation oder Destillation unter Vakuum.

In einem weiteren bevorzugten Umsetzungsprodukt der Formel (III) steht p für p⁶, r für 0, X für X¹, Q' für 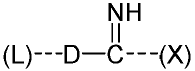 und L für L⁶. Dieses weist somit die Formel (III g) auf, 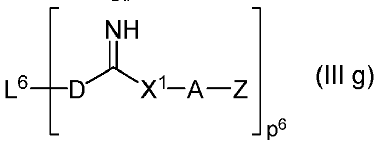 wobei
p⁶ für eine ganze Zahl von 1 bis 3 steht,
X¹ für NR⁷ steht,
L⁶ für einen p⁶-wertigen Kohlenwasserstoffrest mit einem mittleren Molekulargewicht im Bereich von 77 bis 5'000 g/mol, welcher gegebenenfalls Heteroatome, insbesondere Sauerstoff in der Form von Ethergruppen oder Estergruppen, oder Fluoratome aufweist, steht,
und D, A, R⁷ und Z die beschriebenen Bedeutungen aufweisen.

Bevorzugt steht p⁶ für 2 oder 3, insbesondere für 2.

Ein Umsetzungsprodukt der Formel (III g) wird insbesondere erhalten aus der Umsetzung von mindestens einem Amidin der Formel (I a), bei welchem X für NR⁷ steht, mit mindestens einer der beschriebenen funktionellen Verbindungen mit mindestens einer Cyanat- oder Thiocyanatgruppe. Die Umsetzung wird bevorzugt bei einer Temperatur im Bereich von 20 °C bis 150 °C durchgeführt.

In einem weiteren bevorzugten Umsetzungsprodukt der Formel (III) steht p für p⁷, r für 0, X für X¹, Q' für 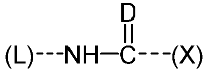 und L für L⁷. Dieses weist somit die Formel (III h) auf, 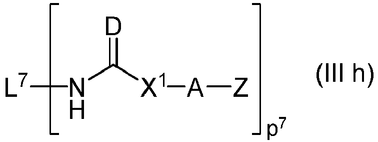 wobei
p⁷ für eine ganze Zahl von 1 bis 4 steht,
X¹ für NR⁷ steht,
L⁷ für einen p⁷-wertigen Kohlenwasserstoffrest mit einem mittleren Molekulargewicht im Bereich von 15 bis 20'000 g/mol, welcher gegebenenfalls Heteroatome, insbesondere in der Form von Ethergruppen, Estergruppen, Amidgruppen, Urethangruppen, Isocyanuratgruppen, Cyanuratgruppen, Isocyanatgruppen oder Alkoxysilangruppen aufweist, steht,
und D, A, R⁷ und Z die beschriebenen Bedeutungen aufweisen.

Bevorzugt steht p⁷ für 1 oder 2 oder 3.

Ein Umsetzungsprodukt der Formel (III h) wird insbesondere erhalten aus der Umsetzung von mindestens einem Amidin der Formel (I a), bei welchem X für NR⁷ steht, mit mindestens einer der beschriebenen funktionellen Verbindungen mit mindestens einer Isocyanat- oder Isothiocyanatgruppe. Die Umsetzung wird bevorzugt bei einer Temperatur im Bereich von 0 °C bis 120 °C durchgeführt. Für den Fall, dass X für NR⁷ steht, ist eine Temperatur im Bereich von 0 °C bis 80 °C bevorzugt. Für den Fall, dass X für O steht, ist eine Temperatur im Bereich von 40 °C bis 120 °C bevorzugt.

In einem weiteren bevorzugten Umsetzungsprodukt der Formel (III) steht p für p⁸, rfür 0, X für NR⁷, Q' für 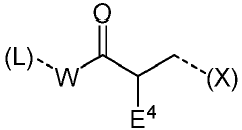 und L für L⁸. Dieses weist somit die Formel (III i) auf, 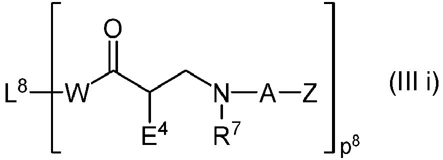 wobei
p⁸ für eine ganze Zahl von 1 bis 3 steht,
L⁸ für einen Wasserstoff-Rest oder einen p⁸-wertigen Kohlenwasserstoffrest mit einem mittleren Molekulargewicht im Bereich von 14 bis 20'000 g/mol, welcher gegebenenfalls Heteroatome, insbesondere in Form von Ethergruppen, Estergruppen, Urethangruppen, Isocyanuratgruppen, Cyanuratgruppen oder Alkoxysilangruppen aufweist, steht,
und W, E⁴, A, R⁷ und Z die beschriebenen Bedeutungen aufweisen. Bevorzugt steht p⁸ für 1 oder 2, insbesondere für 1.

Ein Umsetzungsprodukt der Formel (III i) wird insbesondere erhalten aus der Umsetzung von mindestens einem Amidin der Formel (I a), bei welchem X für NR⁷ steht, mit mindestens einer der beschriebenen funktionellen Verbindungen mit mindestens einer Acrylat-, Methacrylat-, Acrylamid-, Methacrylamid-, Fumarat-, Fumaramid-, Itaconat- oder Itaconamid-Gruppe. Die Umsetzung wird bevorzugt bei einer Temperatur im Bereich von 0 °C bis 140 °C, insbesondere 20 °C bis 120 °C, durchgeführt.

In einem weiteren bevorzugten Umsetzungsprodukt der Formel (III) steht p für p⁹, r für 0, X für NH, Q' für 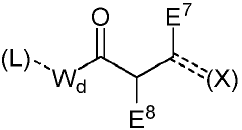 und L für L⁹. Dieses weist somit die Formel (III j) auf, 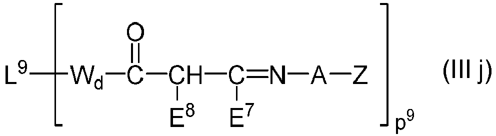 wobei
p⁹ für 1 oder 2 oder 3 steht,
L⁹ für einen p⁹-wertigen Kohlenwasserstoffrest mit einem mittleren Molekulargewicht im Bereich von 15 bis 5'000 g/mol, welcher gegebenenfalls Heteroatome, insbesondere in der Form von Ethergruppen, Estergruppen, aufweist, steht,
und d, W, E⁷, E⁸, A und Z die beschriebenen Bedeutungen aufweisen. Bevorzugt steht p⁹ für 1 oder 2, insbesondere für 1.

Ein Umsetzungsprodukt der Formel (IIIj) wird insbesondere erhalten aus der Umsetzung von mindestens einem Amidin der Formel (I a), bei welchem X für NH steht, mit mindestens einer der beschriebenen funktionellen Verbindungen mit mindestens einer 1,3-Diketon- oder 1,3-Ketoester- oder 1,3-KetoamidGruppe. Die Umsetzung wird bevorzugt bei einer Temperatur im Bereich von 0 °C bis 120 °C, insbesondere 20 °C bis 100 °C, durchgeführt. Das bei der Umsetzung entstehende Wasser wird bevorzugt während oder nach der Umsetzung entfernt, insbesondere durch Azeotropdestillation oder Destillation unter Vakuum.

Die bevorzugten Umsetzungsprodukte der Formel (III) sind aus gut zugänglichen Ausgangsstoffen in einem einfachen Verfahren herstellbar.

Ein Umsetzungsprodukt der Formel (III) bzw. der Formel (III a) oder (III b) oder (III c) oder (III d) oder (III e) oder (III f) oder (III g) oder (III h) oder (III i) oder (III j) kann auch in tautomerer Form vorliegen. Alle möglichen Tautomerformen dieser Umsetzungsprodukte werden im Rahmen der vorliegenden Erfindung als gleichwertig angesehen.

Weiterhin können diese Umsetzungsprodukte in protonierter Form vorliegen. Ebenfalls können diese Umsetzungsprodukte in komplexierter Form vorliegen, insbesondere mit Kationen von Zink, Eisen oder Molybdän.

Ein Umsetzungsprodukt der Formel (III) kann auch erhalten werden, indem in einem ersten Schritt ein Amin der Formel (II a) oder (II b), bei welchem Y für HX steht, mit einer der beschriebenen funktionellen Verbindungen unter Reaktion mindestens einer deren Reaktivgruppen mit der HX-Gruppe zu einem Amin-Zwischenprodukt umgesetzt wird, und dieses in einem zweiten Schritt mit dem Reagens zur Einführung von Amidin-Gruppen umgesetzt wird.

Diese Herstellung ist insbesondere geeignet für Amine, bei welchen X für NH und R¹ für einen Wasserstoff-Rest stehen, also für Polyamine, welche zwei primäre Aminogruppen aufweisen.

Der erste Schritt wird dabei bevorzugt so geführt, dass die primären Amino-gruppen des Amins gegenüber den Reaktivgruppen der funktionellen Verbindung im stöchiometrischen Überschuss vorhanden sind, so dass ein Amin-Zwischenprodukt mit einer primären Aminogruppe entsteht.

Die Reaktionsbedingungen für die an den jeweiligen Umsetzungen beteiligten Reagentien sind dabei bevorzugt dieselben wie bereits beschrieben.

Das Amidin der Formel (I) und/oder ein Umsetzungsprodukt davon wie vorgängig beschrieben, insbesondere ein Umsetzungsprodukt der Formel (III), wird verwendet als Katalysator für die Vernetzung einer Zusammensetzung auf Basis von Silangruppen-haltigen Polymeren, wo es die Vernetzung bzw. Aushärtung der Zusammensetzung beschleunigt.

Das Silangruppen-haltige Polymer ist dabei insbesondere ausgewählt aus der Gruppe bestehend aus Polyorganosiloxanen mit endständigen Silangruppen und Silangruppen-haltigen organischen Polymeren, wie sie im Folgenden genauer beschrieben werden.

Ein Polyorganosiloxan mit endständigen Silangruppen weist den Vorteil auf, dass es im ausgehärteten Zustand besonders wasser- und lichtbeständig ist und besonders weichelastische Eigenschaften ermöglicht.

Ein Silangruppen-haltiges organisches Polymer weist den Vorteil auf, dass es besonders gute Haftungseigenschaften auf einer Vielzahl von Untergründen aufweist und besonders kostengünstig ist.

Ein weiterer Gegenstand der Erfindung ist somit eine Zusammensetzung enthaltend mindestens ein Amidin der Formel (I) und/oder mindestens ein Umsetzungsprodukt, wie vorgängig beschrieben, und mindestens ein Silangruppen-haltiges Polymer. Das Umsetzungsprodukt ist dabei insbesondere ein Umsetzungsprodukt der Formel (III).

Eine solche Zusammensetzung verfügt typischerweise über eine gute Lagerfähigkeit ohne Separationsneigung, erlaubt aufgrund der geringen Toxizität und geringen Flüchtigkeit des Amidins der Formel (I) eine niedrige Gefahreneinstufung und ermöglicht emissions- und geruchsarme Produkte, welche rasch aushärten und dabei ein mechanisch hochwertiges und beständiges Material bilden. Besonders vorteilhaft ist dabei der Umstand, dass dieses Material kaum zu migrationsbedingten Fehlern wie Ausschwitzen oder Substratverschmutzung neigt, im Gegensatz zu Zusammensetzungen mit Katalysatoren nach dem Stand der Technik, wie beispielsweise DBU oder TMG. Zusammensetzungen enthaltend solche aus dem Stand der Technik bekannten Katalysatoren neigen zu Migrationseffekten, was sich vor der Aushärtung durch Separation und nach der Aushärtung durch klebrige und/oder schmierige Oberflächen und/oder Substratverschmutzungen äussern kann. Besonders letztere Effekte sind äusserst unerwünscht, da klebrige und schmierige Oberflächen schnell verschmutzen und schlecht überstreichbar sind, und Substratverunreinigungen zu bleibenden Verfärbungen führen können.

Das Silangruppen-haltige Polymer ist in einer bevorzugten Ausführungsform ein Polyorganosiloxan mit endständigen Silangruppen.

Ein bevorzugtes Polyorganosiloxan mit endständigen Silangruppen weist die Formel (IV) auf, 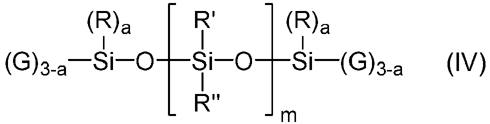 wobei
R, R' und R" unabhängig voneinander jeweils für einen einwertigen Kohlenwasserstoff-Rest mit 1 bis 12 C-Atomen stehen;
G für einen Hydroxyl-Rest oder für einen Alkoxy-, Acetoxy-, Ketoximato-, Amido- oder Enoxy-Rest mit 1 bis 13 C-Atomen steht;
a für 0, 1 oder 2 steht; und
m für eine ganze Zahl im Bereich von 50 bis etwa 2'500 steht.

R steht bevorzugt für Methyl, Vinyl oder Phenyl.

R' und R" stehen bevorzugt unabhängig voneinander jeweils für einen Alkylrest mit 1 bis 5, bevorzugt 1 bis 3 C-Atomen, insbesondere für Methyl.

G steht bevorzugt für einen Hydroxyl-Rest oder für einen Alkoxy- oder Ketoximato-Rest mit 1 bis 6 C-Atomen, insbesondere für einen Hydroxyl-, Methoxy-, Ethoxy-, Methylethylketoximato- oder Methylisobutylketoximato-Rest. Besonders bevorzugt steht G für einen Hydroxylrest.

a steht bevorzugt für 0 oder 1, insbesondere für 0.

Weiterhin ist m bevorzugt so gewählt, dass das Polyorganosiloxan der Formel (IV) bei Raumtemperatur eine Viskosität im Bereich von 100 bis 500'000 mPa·s, insbesondere von 1000 bis 100'000 mPa·s, aufweist. Polyorganosiloxane der Formel (IV) sind gut handhabbar und vernetzen mit Feuchtigkeit und/oder Silanvernetzern zu festen Silicon-Polymeren mit elastischen Eigenschaften.

Geeignete kommerziell erhältliche Polyorganosiloxane der Formel (IV) sind beispielsweise erhältlich von Wacker, Momentive Performance Material, GE Advanced Materials, Dow Corning, Bayer oder Shin Etsu.

Bevorzugt enthält die Zusammensetzung zusätzlich zum Polyorganosiloxan mit endständigen Silangruppen einen Silanvernetzer, insbesondere ein Silan der Formel (V),

(R''')_{q}-Si-(G')_{4-q} (V)

wobei
R'" für einen einwertigen Kohlenwasserstoff-Rest mit 1 bis 12 C-Atomen steht,
G' für einen Hydroxyl-Rest oder für einen Alkoxy-, Acetoxy-, Ketoximato-, Amido- oder Enoxy-Rest mit 1 bis 13 C-Atomen steht; und
q für einen Wert von 0, 1 oder 2, insbesondere für 0 oder 1, steht.

Besonders geeignete Silane der Formel (V) sind Methyltrimethoxysilan, Ethyltrimethoxysilan, Propytrimethoxysilan, Vinyltrimethoxysilan, Methyltriethoxysilan, Vinyltriethoxysilan, Phenyltriethoxysilan, Tetramethoxysilan, Tetraethoxysilan, Methyltris(methylethylketoximo)silan, Vinyltris(methylethylketoximo)silan und Methyltris(isobutylketoximo)silan.

Das Silangruppen-haltige Polymer ist in einer weiteren bevorzugten Ausführungsform ein Silangruppen-haltiges organisches Polymer, insbesondere ein Polyolefin, Polyester, Polyamid, Poly(meth)acrylat oder Polyether oder eine Mischform dieser Polymere, welches jeweils eine oder bevorzugt mehrere Silangruppen trägt. Die Silangruppen können seitlich in der Kette oder endständig stehen und sind über ein C-Atom an das organische Polymer gebunden. Besonders bevorzugt ist das Silangruppen-haltige organische Polymer ein Silangruppen-haltiges Polyolefin oder ein Silangruppen-haltiger Polyester oder ein Silangruppen-haltiges Poly(meth)acrylat oder ein Silangruppen-haltiger Polyether oder eine Mischform dieser Polymere.

Am meisten bevorzugt ist das Silangruppen-haltige organische Polymer ein Silangruppen-haltiger Polyether.

Das Silangruppen-haltige organische Polymer weist als Silangruppen bevorzugt Alkoxysilangruppen auf, insbesondere Alkoxysilangruppen der Formel (VI), 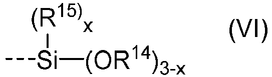 wobei
R¹⁴ für einen linearen oder verzweigten, einwertigen Kohlenwasserstoffrest mit 1 bis 5 C-Atomen, insbesondere für Methyl oder für Ethyl oder für Isopropyl, steht;
R¹⁵ für einen linearen oder verzweigten, einwertigen Kohlenwasserstoffrest mit 1 bis 8 C-Atomen, insbesondere für Methyl oder für Ethyl, steht; und
x für einen Wert von 0 oder 1 oder 2, bevorzugt für 0 oder 1, insbesondere für 0, steht.

Besonders bevorzugt steht R¹⁴ für Methyl oder für Ethyl.

Für bestimmte Anwendungen steht der Rest R¹⁴ bevorzugt für eine Ethylgruppe, da in diesem Fall bei der Aushärtung der Zusammensetzung ökologisch und toxikologisch harmloses Ethanol freigesetzt wird.

Besonders bevorzugt sind Trimethoxysilangruppen, Dimethoxymethylsilangruppen oder Triethoxysilangruppen.

Dabei weisen Methoxysilangruppen den Vorteil auf, dass sie besonders reaktiv sind, und Ethoxysilangruppen weisen den Vorteil auf, dass sie toxikologisch vorteilhaft und besonders lagerstabil sind.

Das Silangruppen-haltige organische Polymer weist im Mittel bevorzugt 1.3 bis 4, insbesondere 1.5 bis 3, besonders bevorzugt 1.7 bis 2.8, Silangruppen pro Molekül auf. Die Silangruppen sind bevorzugt endständig.

Das Silangruppen-haltige organische Polymer weist bevorzugt ein mittleres Molekulargewicht, bestimmt mittels GPC gegenüber Polystyrol-Standard, im Bereich von 1'000 bis 30'000 g/mol, insbesondere von 2'000 bis 20'000 g/mol, auf. Das Silangruppen-haltige organische Polymer weist bevorzugt ein Silan-Equivalentgewicht von 300 bis 25'000 g/Eq, insbesondere von 500 bis 15'000 g/Eq, auf.

Das Silangruppen-haltige organische Polymer kann bei Raumtemperatur fest oder flüssig vorliegen. Bevorzugt ist es bei Raumtemperatur flüssig.

Meist bevorzugt handelt es sich beim Silangruppen-haltigen organischen Polymer um einen bei Raumtemperatur flüssigen Silangruppen-haltigen Polyether, wobei die Silangruppen insbesondere Dialkoxysilangruppen und/oder Trialkoxysilangruppen, besonders bevorzugt Trimethoxysilangruppen oder Triethoxysilangruppen, sind.

Verfahren zur Herstellung von Silangruppen-haltigen Polyethern sind dem Fachmann bekannt.

In einem bevorzugten Verfahren sind Silangruppen-haltige Polyether erhältlich aus der Umsetzung von Allylgruppen-haltigen Polyethern mit Hydrosilanen, gegebenenfalls unter Kettenverlängerung mit beispielsweise Diisocyanaten.

In einem weiteren bevorzugten Verfahren sind Silangruppen-haltige Polyether erhältlich aus der Copolymerisation von Alkylenoxiden und Epoxysilanen, gegebenenfalls unter Kettenverlängerung mit beispielsweise Diisocyanaten.

In einem weiteren bevorzugten Verfahren sind Silangruppen-haltige Polyether erhältlich aus der Umsetzung von Polyetherpolyolen mit Isocyanatosilanen, gegebenenfalls unter Kettenverlängerung mit Diisocyanaten.

In einem weiteren bevorzugten Verfahren sind Silangruppen-haltige Polyether erhältlich aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen. Silangruppen-haltige Polyether aus diesem Verfahren sind besonders bevorzugt. Dieses Verfahren ermöglicht den Einsatz einer Vielzahl von kommerziell gut verfügbaren, kostengünstigen Ausgangsmaterialien, womit unterschiedliche Polymereigenschaften erhalten werden können, beispielsweise eine hohe Dehnbarkeit, eine hohe Festigkeit, ein niedriges Elastizitätsmodul, ein tiefer Glasübergangspunkt oder eine hohe Witterungsbeständigkeit.

Besonders bevorzugt ist der Silangruppen-haltige Polyether erhältlich aus der Umsetzung von NCO-terminierten Urethan-Polyethern mit Aminosilanen oder Hydroxysilanen. Geeignete NCO-terminierte Urethan-Polyether sind erhältlich aus der Umsetzung von Polyetherpolyolen, insbesondere Polyoxyalkylendiolen oder Polyoxyalkylentriolen, bevorzugt Polyoxypropylendiolen oder Polyoxypropylentriolen, mit einer überstöchiometrischen Menge an Polyisocyanaten, insbesondere Diisocyanaten.

Bevorzugt wird die Umsetzung zwischen dem Polyisocyanat und dem Polyetherpolyol unter Feuchtigkeitsausschluss bei einer Temperatur von 50 °C bis 160 °C durchgeführt, gegebenenfalls in Anwesenheit geeigneter Katalysatoren, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Urethan-Polyether nach der Umsetzung aller Hydroxylgruppen ein Gehalt an freien Isocyanatgruppen von 0.1 bis 5 Gewichts-%, bevorzugt 0.2 bis 4 Gewichts-%, besonders bevorzugt 0.3 bis 3 Gewichts-%, bezogen auf das gesamte Polymer, verbleibt.

Bevorzugte Diisocyanate sind ausgewählt aus der Gruppe bestehend aus 1,6-Hexamethylendiisocyanat (HDI), 1-Isocyanato-3,3,5-trimethyl-5-isocyanatomethyl-cyclohexan (=Isophorondiisocyanat oder IPDI), 2,4- und 2,6-Toluylendiisocyanat und beliebige Gemische dieser Isomeren (TDI) und 4,4'-, 2,4'- und 2,2'-Diphenylmethandiisocyanat und beliebige Gemische dieser Isomeren (MDI). Besonders bevorzugt sind IPDI oder TDI. Meist bevorzugt ist IPDI. Damit werden Silangruppen-haltige Polyether mit besonders guter Lichtechtheit erhalten.

Speziell geeignet als Polyetherpolyole sind Polyoxyalkylendiole oder Polyoxyalkylentriole mit einem Ungesättigtheitsgrad tiefer als 0.02 mEq/g, insbesondere tiefer als 0.01 mEq/g, und einem mittleren Molekulargewicht im Bereich von 400 bis 25'000 g/mol, insbesondere 1000 bis 20'000 g/mol.

Neben Polyetherpolyolen können anteilig auch andere Polyole eingesetzt werden, insbesondere Polyacrylatpolyole, sowie niedrigmolekulare Diole oder Triole.

Geeignete Aminosilane für die Umsetzung mit einem NCO-terminierten Urethan-Polyether sind primäre und sekundäre Aminosilane. Bevorzugt sind 3-Aminopropyltrimethoxysilan, 3-Aminopropyldimethoxymethylsilan, 4-Aminobutyl-trimethoxysilan, 4-Amino-3-methylbutyl-trimethoxysilan, 4-Amino-3,3-dimethylbutyl-trimethoxysilan, N-Butyl-3-aminopropyltrimethoxysilan, N-Phenyl-3-aminopropyltrimethoxysilan, Addukte aus primären Aminosilanen wie 3-Aminopropyltrimethoxysilan, 3-Aminopropyldimethoxymethylsilan oder N-(2-Aminoethyl)-3-aminopropyltrimethoxysilan und Michael-Akzeptoren wie Acrylnitril, (Meth)acrylsäureestern, (Meth)acrylsäureamiden, Maleinsäure- oder Fumarsäurediestern, Citraconsäurediestern oder Itaconsäurediestern, insbesondere N-(3-Trimethoxysilylpropyl)amino-bernsteinsäuredimethyl- oder -diethylester. Ebenfalls geeignet sind Analoga der genannten Aminosilane mit Ethoxy- oder Isopropoxygruppen anstelle der Methoxygruppen am Silicium.

Geeignete Hydroxysilane für die Umsetzung mit einem NCO-terminierten Urethan-Polyether sind insbesondere erhältlich aus der Addition von Aminosilanen an Lactone oder an cyclische Carbonate oder an Lactide.

Dafür geeignete Aminosilane sind insbesondere 3-Aminopropyl-trimethoxysilan, 3-Aminopropyl-triethoxysilan, 4-Aminobutyl-trimethoxysilan, 4-Aminobutyl-triethoxysilan, 4-Amino-3-methylbutyl-trimethoxysilan, 4-Amino-3-methylbutyl-triethoxysilan, 4-Amino-3,3-dimethylbutyl-trimethoxysilan, 4-Amino-3,3-dimethylbutyl-triethoxysilan, 2-Aminoethyl-trimethoxysilan oder 2-Aminoethyltriethoxysilan. Besonders bevorzugt sind 3-Aminopropyl-trimethoxysilan, 3-Aminopropyl-triethoxysilan, 4-Amino-3,3-dimethylbutyl-trimethoxysilan oder 4-Amino-3,3-dimethylbutyl-triethoxysilan.

Als Lactone geeignet sind insbesondere γ-Valerolacton, γ-Octalacton, δ-Decalacton, und ε-Decalacton, insbesondere γ-Valerolacton.

Als cyclische Carbonate eignen sich insbesondere 4,5-Dimethyl-1,3-dioxolan-2-on, 4,4-Dimethyl-1,3-dioxolan-2-on, 4-Ethyl-1,3-dioxolan-2-on, 4-Methyl-1,3-dioxolan-2-on oder 4-(Phenoxymethyl)-1,3-dioxolan-2-on.

Als Lactide eignen sich insbesondere 1,4-Dioxan-2,5-dion (Lactid aus 2-Hydroxyessigsäure, auch "Glycolid" genannt), 3,6-Dimethyl-1,4-dioxan-2,5-dion (Lactid aus Milchsäure, auch "Lactid" genannt) und 3,6-Diphenyl-1,4-dioxan-2,5-dion (Lactid aus Mandelsäure).

Bevorzugte Hydroxysilane, welche auf diese Weise erhalten werden, sind N-(3-Triethoxysilylpropyl)-2-hydroxypropanamid, N-(3-Trimethoxysilylpropyl)-2-hydroxypropanamid, N-(3-Triethoxysilylpropyl)-4-hydroxypentanamid, N-(3-Triethoxysilylpropyl)-4-hydroxyoctanamid, N-(3-Triethoxysilylpropyl)-5-hydroxydecanamid und N-(3-Triethoxysilylpropyl)-2-hydroxypropylcarbamat.

Weiterhin sind geeignete Hydroxysilane auch erhältlich aus der Addition von Aminosilanen an Epoxide oder aus der Addition von Aminen an Epoxysilane. Bevorzugte Hydroxysilane, welche auf diese Weise erhalten werden, sind 2-Morpholino-4(5)-(2-trimethoxysilylethyl)cyclohexan-1-ol, 2-Morpholino-4(5)-(2-triethoxysilylethyl)cyclohexan-1-ol oder 1-Morpholino-3-(3-(triethoxysilyl)propoxy)propan-2-ol.

Als Silangruppen-haltige Polyether sind auch kommerziell erhältliche Produkte geeignet, insbesondere die Folgenden: MS Polymer™ (von Kaneka Corp.; insbesondere die Typen S203H, S303H, S227, S810, MA903 und S943); MS Polymer™ bzw. Silyl™ (von Kaneka Corp.; insbesondere die Typen SAT010, SAT030, SAT200, SAX350, SAX400, SAX725, MAX450, MAX951); Excestar® (von Asahi Glass Co. Ltd.; insbesondere die Typen S2410, S2420, S3430, S3630); SPUR+* (von Momentive Performance Materials; insbesondere die Typen 1010LM, 1015LM, 1050MM); Vorasil™ (von Dow Chemical Co.; insbesondere die Typen 602 und 604); Desmoseal® (von Bayer MaterialScience AG; insbesondere die Typen S XP 2458, S XP 2636, S XP 2749, S XP 2774 und S XP 2821), TEGOPAC® (von Evonik Industries AG; insbesondere die Typen Seal 100, Bond 150, Bond 250), Polymer ST (von Hanse Chemie AG/Evonik Industries AG, insbesondere die Typen 47, 48, 61, 61LV, 77, 80, 81); Geniosil® STP (von Wacker Chemie AG; insbesondere die Typen E10, E15, E30, E35).

Besonders bevorzugte Silangruppen-haltige organische Polymere weisen Endgruppen der Formel (VII) auf, 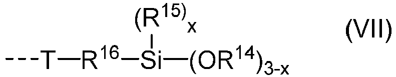 wobei
R¹⁶ für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist, steht;
T für einen zweiwertigen Rest ausgewählt aus -O-, -S-, -N(R¹⁷)-, -O-CO-N(R¹⁷)-, -N(R¹⁷)-CO-O- und -N(R¹⁷)-CO-N(R¹⁷)- steht,
   wobei R¹⁷ für einen Wasserstoff-Rest oder für einen linearen oder verzweigten Kohlenwasserstoff-Rest mit 1 bis 20 C-Atomen, welcher gegebenenfalls cyclische Anteile aufweist, und welcher gegebenenfalls eine Alkoxysilan-,

Ether- oder Carbonsäureestergruppe aufweist, steht; und R¹⁴, R¹⁵ und x die bereits genannten Bedeutungen aufweisen.

Bevorzugt steht R¹⁶ für 1,3-Propylen oder für 1,4-Butylen, wobei Butylen mit einer oder zwei Methylgruppen substituiert sein kann.

Besonders bevorzugt steht R¹⁶ für 1,3-Propylen.

Bevorzugt ist das Amidin der Formel (I) oder das Umsetzungsprodukt in der Zusammensetzung in einer solchen Menge vorhanden, dass die Konzentration an Amidin-Gruppen aus dem Amidin der Formel (I) und/oder dem Umsetzungsprodukt bezogen auf die Menge des vernetzbaren Polymers im Bereich von 0.2 bis 20 mmol/100 g Polymer, bevorzugt 0.2 bis 15 mmol/100 g Polymer, insbesondere 0.5 bis 10 mmol/100 g, liegt.

Eine solche Zusammensetzung weist eine gute Lagerfähigkeit und eine schnelle Aushärtung auf.

Zusätzlich zum Amidin der Formel (I) oder zum Umsetzungsprodukt kann die Zusammensetzung weitere Katalysatoren, insbesondere für die Vernetzung von Silangruppen, enthalten. Als weitere Katalysatoren geeignet sind insbesondere Metall-Verbindungen und/oder basische Stickstoff- oder Phosphorverbindungen.

Geeignete Metall-Verbindungen sind insbesondere Verbindungen von Zinn, Titan, Zirkonium, Aluminium oder Zink, insbesondere Diorganozinn(IV)-Verbindungen wie insbesondere Dibutylzinn(IV)-diacetat, Dibutylzinn(IV)-dilaurat, Dibutylzinn(IV)-dineodecanoat oder Dibutylzinn(IV)-bis(acetylacetonat) und Dioctylzinn(IV)-dilaurat, sowie Titan(IV)- oder Zirkonium(IV)- oder Aluminium(III)- oder Zink(II)-Komplexe mit insbesondere Alkoxy-, Carboxylat-, 1,3-Diketonat-, 1,3-Ketoesterat- oder 1,3-Ketoamidat-Liganden.

Geeignete basische Stickstoff- oder Phosphorverbindungen sind insbesondere Imidazole, Pyridine, Phosphazen-Basen oder bevorzugt Amine, Hexahydrotriazine, Biguanide, Guanidine oder weitere Amidine.

Geeignete Amine sind insbesondere Alkyl-, Cycloalkyl- oder Aralkylamine wie Triethylamin, Triisopropylamin, 1-Butylamin, 2-Butylamin, tert.Butylamin, 3-Methyl-1-butylamin, 3-Methyl-2-butylamin, Dibutylamin, Tributylamin, Hexylamin, Dihexylamin, Cyclohexylamin, Dicyclohexylamin, Dimethylcyclohexylamin, Benzylamin, Dibenzylamin, Dimethylbenzylamin, Octylamin, 2-Ethylhexylamin, Di-(2-ethylhexyl)amin, Laurylamin, N,N-Dimethyl-laurylamin, Stearylamin, N,N-Dimethyl-stearylamin; von natürlichen Fettsäuregemischen abgeleitete Fettamine, wie insbesondere Cocoalkylamin, N,N-Dimethyl-cocoalkylamin, C₁₆₋₂₂-Alkylamin, N,N-Dimethyl-C₁₆₋₂₂-alkylamin, Soyaalkylamin, N,N-Dimethyl-soyaalkylamin, Oleylamin, N,N-Dimethyl-oleylamin, Talgalkylamin oder N,N-Dimethyl-talgalkylamin, erhältlich beispielsweise unter den Handelsnamen Armeen® (von Akzo Nobel) oder Rofamin® (von Ecogreen Oleochemicals); aliphatische, cycloaliphatische oder araliphatische Diamine wie Ethylendiamin, Butandiamin, Hexamethylendiamin, Dodecandiamin, Neopentandiamin, 2-Methyl-pentamethylendiamin (MPMD), 2,2(4),4-Trimethylhexamethylendiamin (TMD), Isophorondiamin (IPD), 2,5(2,6)-Bis-(aminomethyl)-bicyclo[2.2.1]heptan (NBDA), 1,3-Xylylendiamin (MXDA), N,N'-Di(tert.butyl)ethylendiamin, N,N,N',N'-Tetramethyl-ethylendiamin, N,N,N',N'-Tetramethyl-propylendiamin, N,N,N',N'-Tetramethyl-hexamethylendiamin, 3-Dimethylaminopropylamin, 3-(Methylamino)propylamin, 3-(Cyclohexylamino)propylamin, Piperazin, N-Methylpiperazin, N,N'-Dimethylpiperazin, 1,4-Diazabicyclo[2.2.2]octan, Fettpolyamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, erhältlich beispielsweise unter dem Handelsnamen Duomeen® (von Akzo Nobel); Polyalkylenamine wie Diethylentriamin, Dipropylentriamin, Triethylentetramin (TETA), Tetraethylenpentamin (TEPA), Pentamethylenhexamin (PEHA), 3-(2-Aminoethyl)aminopropylamin, N,N'-Bis(3-aminopropyl)ethylendiamin, N-(3-Aminopropyl)-N-methylpropandiamin, Bis(3-dimethylaminopropyl)amin, N-(3-Dimethylaminopropyl)-1,3-propylendiamin, N-(2-Aminoethyl)piperazin (N-AEP), N-(2-Aminopropyl)piperazin, N,N'-Di-(2-aminoethyl)piperazin, 1-Methyl-4-(2-dimethylaminoethyl)piperazin, N,N,N',N",N"-Pentamethyldiethylentriamin, N,N,N',N",N"-Pentamethyldipropylentriamin, Polyethylenimine, erhältlich beispielsweise unter den Handelsnamen Lupasol® (von BASF) und Epomin® (von Nippon Shokubai); Etheramine, wie insbesondere 2-Methoxyethylamin, 2-Ethoxyethylamin, 3-Methoxypropylamin, 3-Ethoxypropylamin, 3-(2-Ethylhexyloxy)propylamin, 3-(2-Methoxyethoxy)propylamin, 2(4)-Methoxyphenylethylamin, Morpholin, N-Methylmorpholin, N-Ethylmorpholin, 2-Aminoethylmorpholin, Bis(2-aminoethyl)ether, Bis(dimethylaminoethyl)-ether, Bis(dimorpholinoethyl)ether, N,N,N'-Trimethyl-N'-hydroxyethylbis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder 2-Aminopropyl-terminierte Glykole, wie sie beispielsweise unter dem Handelsnamen Jeffamin® (von Huntsman) erhältlich sind; Aminoalkohole, wie insbesondere Ethanolamin, Isopropanolamin, Diethanolamin, Diisopopanolamin, Triethanolamin, Triisopropanolamin, N-Butylethanolamin, Diglykolamin, N,N-Diethylethanolamin, N-Methyldiethanolamin, N-Methyldiisopropylamin, N,N,N'-Trimethylaminoethylethanolamin, N-(3-Dimethylaminopropyl)-N,N-diisopropanolamin, N,N-Bis(3-dimethylaminopropyl)-N-isopropanolamin, 2-(2-Dimethylaminoethoxy)ethanolamin oder Addukte aus Mono- und Polyaminen mit Epoxiden oder Diepoxiden; Phenolgruppen-haltige Amine, wie insbesondere Kondensationsprodukte aus Phenolen, Aldehyden und Aminen (sogenannte Mannich-Basen und Phenalkamine) wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin sowie im Handel unter den Markennamen Cardolite® (von Cardolite), Aradur® (von Huntsman) und Beckopox® (von Cytec) erhältliche Phenalkamine; Amidgruppen-haltige Polyamine, sogenannte Polyamidoamine, wie sie im Handel erhältlich sind, beispielsweise unter den Markennamen Versamid® (von Cognis), Aradur® (von Huntsman), Euretek® (von Huntsman) oder Beckopox® (von Cytec); oder Aminosilane, wie insbesondere 3-Aminopropyltrimethoxysilan, 3-Aminopropyldimethoxymethylsilan, N-(2-Aminoethyl)-3-aminopropyltrimethoxysilan, N-(2-Aminoethyl)-3-aminopropyl-methyldimethoxysilan, N-(2-Aminoethyl)-N'-[3-(trimethoxysilyl)propyl]ethylendiamin oder deren Analoga mit Ethoxy- anstelle der Methoxygruppen am Silicium.

Geeignete Hexahydrotriazine sind insbesondere 1,3,5-Hexahydrotriazin oder 1,3,5-Tris(3-(dimethylamino)propyl)-hexahydrotriazin.

Geeignete Biguanide sind insbesondere Biguanid, 1-Butylbiguanid, 1,1-Dimethylbiguanid, 1-Butylbiguanid, 1-Phenylbiguanid oder 1-(o-Tolyl)biguanid (OTBG).

Geeignete Guanidine sind insbesondere 1-Butylguanidin, 1,1-Dimethylguanidin, 1,3-Dimethylguanidin, 1,1,3,3-Tetramethylguanidin (TMG), 2-(3-(Trimethoxysilyl)propyl)-1,1,3,3-tetramethylguanidin, 2-(3-(Methyldimethoxysilyl)propyl)-1,1,3,3-tetramethylguanidin, 2-(3-(Triethoxysilyl)propyl)-1,1,3,3-tetramethylguanidin, 1,5,7-Triazabicyclo[4.4.0]dec-5-en (TBD), 7-Methyl-1,5,7-triazabicyclo[4.4.0]dec-5-en, 7-Cyclohexyl-1,5,7-triazabicyclo[4.4.0]dec-5-en, 1-Phenylguanidin, 1-(o-Tolyl)guanidin (OTG), 1,3-Diphenylguanidin, 1,3-Di(o-tolyl)guanidin oder 2-Guanidinobenzimidazol.

Geeignete weitere Amidine sind insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en, 6-Dibutylamino-1,8-diazabicyclo[5.4.0]undec-7-en, N,N'-Di-n-hexylacetamidin (DHA), 2-Methyl-1,4,5,6-tetrahydropyrimidin, 1,2-Dimethyl-1,4,5,6-tetrahydropyrimidin, 2,5,5-Trimethyl-1,4,5,6-tetrahydropyrimidin, N-(3-Trimethoxysilylpropyl)-4,5-dihydroimidazol oder N-(3-Triethoxysilylpropyl)-4,5-dihydroimidazol.

Weiterhin kann die Zusammensetzung als Co-Katalysator eine Säure enthalten, insbesondere eine Carbonsäure. Bevorzugt sind aliphatische Carbonsäuren wie Ameisensäure, Laurinsäure, Stearinsäure, Isostearinsäure, Ölsäure, 2-Ethyl-2,5-dimethylcapronsäure, 2-Ethylhexansäure, Neodecansäure, Fettsäuregemische aus der Verseifung von natürlichen Fetten und Ölen oder Di- und Polycarbonsäuren, insbesondere Poly(meth)acrylsäuren.

Die Zusammensetzung ist in einer bevorzugten Ausführungsform im Wesentlichen frei von Organozinn-Verbindungen. Organozinn-freie Zusammensetzungen sind hinsichtlich Gesundheitsschutz und Umweltschutz vorteilhaft. Insbesondere beträgt der Zinngehalt der härtbaren Zusammensetzung weniger als 0.1 Gew.-%, insbesondere weniger als 0.05 Gew.-%.

Die Zusammensetzung enthält in einer weiteren bevorzugten Ausführungsform eine Kombination aus mindestens einem Amidin der Formel (I) und/oder mindestens einem Umsetzungsprodukt davon wie vorgängig beschrieben und mindestens einer Organozinn-Verbindung, insbesondere einer Diorganozinn(IV)-Verbindung wie die vorgängig genannten. Eine solche Zusammensetzung weist bereits bei einem geringen Zinn-Gehalt eine hohe Aushärtungsgeschwindigkeit auf, was aus toxikologischen und ökologischen Gründen vorteilhaft ist.

In einer Ausführungsform enthält die Zusammensetzung neben dem beschriebenen Katalysator zusätzlich mindestens ein Organotitanat. Eine Kombination aus dem beschriebenen Katalysator und einem Organotitanat weist eine besonders hohe katalytische Aktivität auf. Dadurch wird eine schnelle Aushärtung einer solchen Zusammensetzung bei einer verhältnismässig geringen Einsatzmenge an Organotitanat ermöglicht.

Als Organotitanat geeignet sind insbesondere Titan(IV)-Komplexverbindungen. Bevorzugte Organoititanate sind insbesondere ausgewählt aus
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet;
wobei als Alkoholat-Liganden insbesondere Isobutoxy, n-Butoxy, Isopropoxy, Ethoxy und 2-Ethylhexoxy geeignet sind.

Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) und Ken-React® KR® TTS, 7, 9QS, 12, 26S, 33DS, 38S, 39DS, 44, 134S, 138S, 133DS, 158FS oder LICA® 44 (alle von Kenrich Petrochemicals).

Ganz besonders geeignete Organotitanate sind ausgewählt aus Bis(ethylacetoacetato)diisobutoxy-titan(IV) (kommerziell erhältlich beispielsweise als Tyzor® IBAY von Dorf Ketal), Bis(ethylacetoacetato)diisopropoxy-titan(IV) (kommerziell erhältlich beispielsweise als Tyzor® DC von Dorf Ketal), Bis(acetylacetonato)diisopropoxy-titan(IV), Bis(acetylacetonato)diisobutoxy-titan(IV), Tris(oxyethyl)-amin-isopropoxy-titan(IV), Bis[tris(oxyethyl)amin]diisopropoxy-titan(IV), Bis(2-ethylhexan-1,3-dioxy)-titan(IV), Tris[2-((2-Aminoethyl)amino)ethoxy]ethoxy-titan(IV), Bis(neopentyl(diallyl)oxy)-diethoxy-titan(IV), Titan(IV)-tetrabutanolat, Tetra(2-ethylhexyloxy)titanat, Tetra(isopropoxy)titanat und Polybutyltitanat. Am meisten bevorzugt sind Bis(ethylacetoacetato)diisobutoxy-titan(IV) oder Bis(ethylacetoacetato)diisopropoxy-titan(IV).

Die Zusammensetzung kann weitere Bestandteile enthalten, insbesondere die folgenden Hilfs- und Zusatzmittel:
- Haftvermittler und/oder Vernetzer, insbesondere Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-dimethoxymethylsilan, N-(2-Aminoethyl)-N'-[3-(trimethoxysilyl)propyl]ethylendiamin oder deren Analoga mit Ethoxy- anstelle von Methoxygruppen, weiterhin N-Phenyl-, N-Cyclohexyl- oder N-Alkylaminosilane, Mercaptosilane, Epoxysilane, (Meth)acrylosilane, Anhydridosilane, Carbamatosilane, Alkylsilane oder Iminosilane, oligomere Formen dieser Silane, Addukte aus primären Aminosilanen mit Epoxysilanen oder (Meth)acrylosilanen oder Anhydridosilanen, aminofunktionelle Alkylsilsesquioxane, insbesondere aminofunktionelles Methylsilsesquioxan oder aminofunktionelles Propylsilsesquioxan. Insbesondere geeignet sind 3-Aminopropyltrimethoxysilan, 3-Aminopropyltriethoxysilan, N-(2-Aminoethyl)-3-aminopropyltrimethoxysilan, N-(2-Aminoethyl)-3-aminopropyl-triethoxysilan, 3-Glycidoxypropyltrimethoxysilan, 3-Glycidoxypropyltriethoxysilan oder 3-Ureidopropyltrimethoxysilan, oder oligomere Formen dieser Silane;
- Trocknungsmittel, insbesondere Tetraethoxysilan, Vinyltrimethoxysilan, Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, Calciumoxid oder Molekularsiebe, insbesondere Vinyltrimethoxysilan oder Vinyltriethoxysilan;
- Weichmacher, insbesondere Trialkylsilyl-terminierte Polydialkylsiloxane, vorzugsweise Trimethylsilyl-terminierte Polydimethylsiloxane, insbesondere mit Viskositäten im Bereich von 10 bis 1'000 mPa·s, oder entsprechende Verbindungen, bei denen einige der Methylgruppen ersetzt sind durch andere organische Gruppen, insbesondere Phenyl-, Vinyl- oder Trifluorpropylgruppen, sogenannte Reaktivweichmacher in Form von monofunktionellen, also einseitig reaktiven, Polysiloxanen, Carbonsäureester wie Phthalate, insbesondere Dioctylphthalat, Bis(2-ethylhexyl)phthalat, Bis(3-propylheptyl)-phthalat, Diisononylphthalat oder Diisodecylphthalat, Diester von ortho-Cyclohexandicarbonsäure, insbesondere Diisononyl-1,2-cyclohexandicarboxylat, Adipate, insbesondere Dioctyladipat, Bis(2-Ethylhexyl)adipat, Azelate, insbesondere Bis(2-ethylhexyl)acelat, Sebacate, insbesondere Bis(2-ethylhexyl)sebacat oder Diisononylsebacat, Polyole, insbesondere Polyoxyalkylenpolyole oder Polyesterpolyole, Glykolether, Glykolester, organische Phosphor- oder Sulfonsäureester, Sulfonsäureamide, Polybutene oder von natürlichen Fetten oder Ölen abgeleitete Fettsäuremethyl- oder -ethylester, auch "Biodiesel" genannt, wobei Siloxangruppen-haltige Weichmacher besonders geeignet sind für Silangruppen-haltige Polymere in Form von Polyorganosiloxanen;
- Lösemittel;
- anorganische oder organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene;
- Stabilisatoren gegen Oxidation, Wärme, Licht oder UV-Strahlung;
- natürliche Harze, Fette oder Öle wie Kolophonium, Schellack, Leinöl, Rizinusöl oder Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid und Magnesiumhydroxid, oder insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis-oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate;
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in härtbaren Zusammensetzungen eingesetzte Substanzen. Es kann sinnvoll sein, gewisse Bestandteile vor dem Einmischen in die Zusammensetzung chemisch oder physikalisch zu trocknen.

In einer bevorzugten Ausführungsform enthält die Zusammensetzung mindestens ein Trocknungsmittel und mindestens einen Haftvermittler und/oder Vernetzer.

In einer bevorzugten Ausführungsform enthält die Zusammensetzung keine Phthalate als Weichmacher. Solche Zusammensetzungen sind toxikologisch vorteilhaft und weisen weniger Probleme mit Migrationseffekten auf.

Die Zusammensetzung wird vorzugsweise unter Ausschluss von Feuchtigkeit hergestellt und aufbewahrt. Typischerweise ist sie in einer geeigneten Verpackung oder Anordnung, wie insbesondere einer Flasche, einer Büchse, einem Beutel, einem Eimer, einem Fass oder einer Kartusche, unter Ausschluss von Feuchtigkeit lagerstabil.

Die Zusammensetzung kann in Form einer einkomponentigen oder in Form einer mehrkomponentigen, insbesondere zweikomponentigen, Zusammensetzung vorliegen.

Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist. Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, gegebenenfalls unter Einwirkung von Feuchtigkeit.

Für den Fall, dass die Zusammensetzung ein Polyorganosiloxan mit endständigen Silangruppen enthält, ist sowohl eine einkomponentige Zusammensetzung, auch als RTV-1 bezeichnet, als auch eine zweikomponentige Zusammensetzung, auch als RTV-2 bezeichnet, bevorzugt. Im Fall einer RTV-2 Zusammensetzung ist das Polyorganosiloxan mit endständigen Silangruppen bevorzugt ein Bestandteil der ersten Komponente und ein Silanvernetzer, insbesondere ein Silanvernetzer der Formel (VI), ist bevorzugt ein Bestandteil der zweiten Komponente. Das Amidin der Formel (I) oder ein Umsetzungsprodukt davon kann dabei in der ersten und/oder in der zweiten Komponente enthalten sein.

Für den Fall, dass die Zusammensetzung ein Silangruppen-haltiges organisches Polymer enthält, ist die Zusammensetzung bevorzugt einkomponentig.

Eine zweite oder gegebenenfalls weitere Komponenten wird bzw. werden mit der ersten Komponente vor oder bei der Applikation vermischt, insbesondere über einen Statikmischer oder über einen dynamischen Mischer.

Die Zusammensetzung wird insbesondere umgebungswarm, bevorzugt in einem Temperaturbereich zwischen 0 °C und 45 °C, insbesondere 5 °C bis 35 °C, appliziert und härtet auch bei diesen Bedingungen aus.

Bei der Applikation beginnt die Vernetzungsreaktion der Silangruppen, gegebenenfalls unter Einfluss von Feuchtigkeit. Vorhandene Silangruppen können mit vorhandenen Silanolgruppen zu Siloxangruppen (Si-O-Si-Gruppen) kondensieren. Vorhandene Silangruppen können bei Kontakt mit Feuchtigkeit auch zu Silanolgruppen (Si-OH-Gruppen) hydrolysieren und durch nachfolgende Kondensationsreaktionen Siloxangruppen (Si-O-Si-Gruppen) bilden. Als Ergebnis dieser Reaktionen härtet die Zusammensetzung schliesslich aus. Das Amidin der Formel (I) oder ein Umsetzungsprodukt davon beschleunigt diese Aushärtung.

Falls für die Aushärtung Wasser benötigt wird, kann dieses entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation Wasser oder eine Wasser enthaltende Komponente zugesetzt werden, zum Beispiel in Form einer wasserhaltigen oder Wasser freisetzenden Flüssigkeit oder Paste. Eine Paste ist insbesondere geeignet für den Fall, dass die Zusammensetzung selber in Form einer Paste vorliegt.

Bei einer Aushärtung mittels Luftfeuchtigkeit härtet die Zusammensetzung von aussen nach innen durch, wobei zunächst eine Haut an der Oberfläche der Zusammensetzung gebildet wird. Die sogenannte Hautbildungszeit stellt ein Mass für die Aushärtungsgeschwindigkeit der Zusammensetzung dar. Die Geschwindigkeit der Aushärtung wird dabei im Allgemeinen von verschiedenen Faktoren, wie beispielsweise der Verfügbarkeit von Wasser, der Temperatur usw., bestimmt.

Die Zusammensetzung eignet sich für eine Vielzahl von Anwendungen, insbesondere als Anstrich, Lack oder Primer, als Harz zur Herstellung von Faserverbundwerkstoff (Composite), als Hartschaum, Weichschaum, Formteil, Elastomer, Faser, Folie oder Membran, als Vergussmasse, Dichtstoff, Klebstoff, Belag, Beschichtung oder Anstrich für Bau- und Industrieanwendungen, beispielsweise als Nahtabdichtung, Hohlraumversiegelung, Elektroisolationsmasse, Spachtelmasse, Fugendichtstoff, Schweiss- oder Bördelnahtdichtstoff, Montageklebstoff, Karrosserieklebstoff, Scheibenklebstoff, Sandwichelementklebstoff, Kaschierklebstoff, Laminatklebstoff, Verpackungsklebstoff, Holzklebstoff, Parkettklebstoff, Verankerungsklebstoff, Bodenbelag, Bodenbeschichtung, Balkonbeschichtung, Dachbeschichtung, Betonschutzbeschichtung, Parkhausbeschichtung, Versiegelung, Rohrbeschichtung, Korrosionsschutzbeschichtung, Textilbeschichtung, Dämpfungselement, Dichtungselement oder Spachtelmasse.

Besonders geeignet ist die Zusammensetzung als Klebstoff und/oder Dichtstoff, insbesondere für die Fugenabdichtung und für elastische Klebeverbindungen in Bau- und Industrieanwendungen, sowie als elastische Beschichtung mit rissüberbrückenden Eigenschaften, insbesondere zum Schützen und/oder Abdichten von beispielsweise Dächern, Böden, Balkonen, Parkdecks oder Betonröhren.

Bevorzugt stellt die Zusammensetzung somit einen Klebstoff oder einen Dichtstoff oder eine Beschichtung dar.

Eine solche Zusammensetzung enthält typischerweise Weichmacher, Füllstoffe, Haftvermittler und/oder Vernetzer und Trocknungsmittel und gegebenenfalls weitere Hilfs- und Zusatzstoffe.

Für eine Anwendung als Klebstoff oder Dichtstoff weist die Zusammensetzung bevorzugt eine pastöse Konsistenz mit strukturviskosen Eigenschaften auf. Ein solcher pastöser Dichtstoff oder Klebstoff wird insbesondere aus handelsüblichen Kartuschen, welche manuell, mittels Druckluft oder Batterie betrieben werden, oder aus einem Fass oder Hobbock mittels einer Förderpumpe oder eines Extruders, gegebenenfalls mittels eines Applikationsroboters, auf ein Substrat aufgetragen.

Für eine Anwendung als Beschichtung weist die Zusammensetzung bevorzugt eine bei Raumtemperatur flüssige Konsistenz mit selbstverlaufenden Eigenschaften auf. Gegebenenfalls ist sie leicht thixotrop, so dass die Beschichtung an abschüssigen bis senkrechten Flächen applizierbar ist, ohne sofort wegzufliessen. Sie wird insbesondere appliziert mittels Rolle oder Pinsel oder durch Ausgiessen und Verteilen mittels beispielsweise einem Roller, einem Schaber oder einer Zahntraufel.

Bei der Applikation wird die Zusammensetzung bevorzugt auf mindestens ein Substrat appliziert.

Geeignete Substrate sind insbesondere
- Glas, Glaskeramik, Beton, Mörtel, Backstein, Ziegel, Gips oder Natursteine wie Kalkstein, Granit oder Marmor;
- Metalle und Legierungen, wie Aluminium, Eisen, Stahl oder Buntmetalle, sowie oberflächenveredelte Metalle oder Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Epoxidharze, Polyurethane (PUR), Polyoxymethylen (POM), Polyolefine (PO), Polyethylen (PE) oder Polypropylen (PP), Ethylen/Propylen-Copolymere (EPM) oder Ethylen/Propylen/Dien-Terpolymere (EPDM), oder faserverstärkte Kunststoffe wie Kohlefaserverstärkte Kunststoffe (CFK), Glasfaser-verstärkte Kunststoffe (GFK) oder Sheet Moulding Compounds (SMC), wobei die Kunststoffe bevorzugt mittels Plasma, Corona oder Flammen oberflächenbehandelt sein können;
- beschichtete Substrate, wie pulverbeschichtete Metalle oder Legierungen;
- Farben oder Lacke, insbesondere Automobildecklacke.

Die Substrate können bei Bedarf vor dem Applizieren der Zusammensetzung vorbehandelt werden, insbesondere durch physikalische und/oder chemische Reinigungsverfahren oder durch das Aufbringen eines Haftvermittlers, einer Haftvermittlerlösung oder eines Primers.

Besonders geeignet ist die Zusammensetzung für den Kontakt mit Substraten, die besonders empfindlich sind auf Störungen durch migrierende Substanzen, insbesondere durch das Ausbilden von Verfärbungen oder Flecken. Dies sind insbesondere feinporige Substrate wie Marmor, Kalkstein oder andere Natursteine, Gips, Zementmörtel oder Beton, aber auch Kunststoffe. Insbesondere auf PVC werden bei der Anwesenheit von Katalysatoren wie beispielsweise DBU oder TMG starke Verfärbungen beobachtet, die sich durch Reinigung nicht entfernen lassen. Solche Effekte werden mit dem Amidin der Formel (I) oder einem Umsetzungsprodukt davon nicht beobachtet.

Verklebt oder abgedichtet werden können zwei gleichartige oder zwei verschiedene Substrate, insbesondere die vorgängig genannten Substrate.

Nach der Aushärtung der Zusammensetzung mit Wasser, insbesondere in Form von Luftfeuchtigkeit, und/oder mit mindestens einem geeigneten Vernetzer wird eine ausgehärtete Zusammensetzung erhalten.

Aus der Anwendung der Zusammensetzung entsteht ein Artikel, welcher mit der Zusammensetzung insbesondere verklebt, abgedichtet oder beschichtet wurde. Beim Artikel handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter; oder der Artikel kann ein Anbauteil davon sein.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet.

"EEW" steht für das Epoxid-Equivalentgewicht.

**¹H-NMR-Spektren** wurden auf einem Spektrometer des Typs Bruker Ascend 400 bei 400.14 MHz gemessen; die chemischen Verschiebungen δ sind angegeben in ppm relativ zu Tetramethylsilan (TMS). Kopplungskonstanten J sind angegeben in Hz. Echte und Pseudo-Kopplungsmuster wurden nicht unterschieden.

**Infrarotspektren** (FT-IR) wurden auf einem mit horizontaler ATR-Messeinheit mit Diamant-Kristall ausgestatteten FT-IR Gerät Nicolet iS5 von Thermo Scientific gemessen. Flüssige Proben wurden unverdünnt als Filme aufgetragen, feste Proben wurden in CH₂Cl₂ gelöst. Die Absorptionsbanden sind in Wellenzahlen (cm⁻¹) angegeben (Messfenster: 4000-650 cm⁻¹).

**Gaschromatogramme** (GC) wurden gemessen im Temperaturbereich von 60 bis 320 °C mit einer Aufheizrate von 15 °C/min und 10 min Verweilzeit bei 320 °C. Die Injektortemperatur betrug 250 °C. Es wurde eine Zebron ZB-5 Säule verwendet (L = 30 m, ID = 0.25 mm, dj = 0.5 µm) bei einem Gasfluss von 1.5 ml/Min. Die Detektion erfolgte mittels Flammenionisation (FID), wobei die Signale via Flächenprozent-Methode ausgewertet wurden.

Die **Hautbildungszeit** (HBZ) wurde dadurch bestimmt, dass einige Gramm der Zusammensetzung in einer Schichtdicke von ca. 2 mm auf Pappkarton aufgetragen wurden und im Normklima die Zeitdauer gemessen wurde, bis beim leichten Antippen der Oberfläche der Zusammensetzung mittels einer Pipette aus LDPE erstmals keine Rückstände auf der Pipette mehr zurückblieben.

Die Beschaffenheit der **Oberfläche** wurde haptisch geprüft.

Die mechanischen Eigenschaften **Zugfestigkeit, Bruchdehnung** und **E-Modul** (bei 0-5% und bei 0-50% Dehnung) wurden gemäss DIN EN 53504 bei einer Zuggeschwindigkeit von 200 mm/min. gemessen.

**Viskositäten** wurden auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.

### verwendetes Reagens zur Einführung von Amidin-Gruppen:

| | |
|---|---|
| Trimethylorthoacetat | (Sigma-Aldrich) |

### verwendete funktionelle Verbindungen:

| | |
|---|---|
| Diethyl adipat | (Sigma-Aldrich) |
| tert.Butyl acrylat | (Sigma-Aldrich) |
| Tetrahydrofurfuryl methacrylat | (Sigma-Aldrich) |
| Ethyl acrylat | (Sigma-Aldrich) |
| Trimethylolpropan triacrylat | (Sigma-Aldrich) |

### Herstellung von Amidinen der Formel (I):

### Amidin A1: 1-(2-Hydroxyethyl)-2-methyl-1,4,5,6-tetrahydropyrimidin

In einem Rundkolben wurden 11.91 g N-(3-Aminopropyl)-2-aminoethanol, 15.94 g Trimethylorthoacetat und 0.32 g Lanthan(III)-trifluormethansulfonat unter Rühren während 24 Stunden auf 120 °C erwärmt. Darauf wurde das Reaktionsgemisch im Vakuum von den flüchtigen Bestandteilen befreit und der Rückstand im Vakuum destilliert. Man erhielt 14.44 g eines farblosen geruchsarmen Öls mit einer Siedetemperatur von 130 bis 135 °C bei 0.1 mbar, welches gemäss GC-Spektrum einen Gehalt von 98% Amidin A1 enthielt und beim Stehenlassen bei Raumtemperatur zu einem weissen Feststoff kristallisierte.
¹H-NMR (CDCl₃): δ 1.83 (*quint.,* 2 H, J = 5.6, NCH₂C*H*₂CH₂N), 2.02 (s, 3 H, CH₃), 3.24 (t, 2 H, J = 5.8, NC*H*₂CH₂OH), 3.31 (*m*, 4 H, NC*H*₂CH₂C*H*₂N), 3.69 (*t,* 2 H, J = 5.7, NCH₂C*H*₂OH).

FT-IR: 3214, 3177, 2996, 2925, 2843, 1630, 1542, 1475, 1438, 1380, 1360, 1322, 1294, 1273, 1204, 1191, 1139, 1114, 1095, 1035, 1009, 977, 915, 875, 839, 731.

### Amidin A2: 1-(3-Aminopropyl)-2-methyl-1,4,5,6-tetrahydropyrimidin

In einem Rundkolben wurden 62.97 g Trimethylorthoacetat, 62.12 g Bis(3-aminopropyl)amin (Baxxodur® EC 110, von BASF) und 2.80 g Lanthan(III)-trifluormethansulfonat vermischt und die Mischung unter Rühren während 3 Tagen auf 120 °C unter Rückfluss erwärmt. Darauf wurde das Reaktionsgemisch im Vakuum von den flüchtigen Bestandteilen befreit und der Rückstand im Vakuum destilliert. Man erhielt 26.65 g eines farblosen Öls mit einer Siedetemperatur von 85-88 °C bei 0.1 mbar, welches gemäss GC-Spektrum einen Gehalt von 87% Amidin A2 enthielt.
¹H-NMR (CDCl₃) (nur Signale von Amidin A2): δ 1.05 (s, 2 H, NH₂), 1.57-1.70 (*m*, 2 H, *CH*₂CH₂NH₂), 1.74-1.86 (*m,* 2 H, C=NCH₂C*H*₂), 1.97 (s, 3 H, CH₃), 2.60-2.80 (*m*, 2 H, CH₂C*H*₂NH₂), 3.10-3.24 und 3.25-3.34 (2 x *m*, 2 x 2 H, CH₂N).

FT-IR: 3260, 2924, 2748, 1611, 1482, 1433,1375, 1353, 1317, 1289, 1211, 1149, 1126, 1099, 1085, 1031, 1014, 942, 879, 821, 752, 735, 692.

### Amidin A3: 1-(3-Dimethylaminopropyl)-2-methyl-1,4,5,6-tetrahydropyrimidin

In einem Rundkolben wurden 131.63 g Ethylacetoacetat in 50 ml Toluol vorgelegt und unter Rühren und Kühlung langsam 161.09 g N¹-((3-Dimethylamino)-propyl)-1,3-diaminopropan (von BASF) zugetropft, wobei die Temperatur bei 20 bis 30 °C gehalten wurde. Darauf wurde das Azeotrop aus Toluol und Wasser bei 40 °C und 10 mbar mittels Destillation aus der Reaktionsmischung entfernt und anschliessend das restliche Toluol und Ethylacetat mittels Destillation bei Normaldruck entfernt und der Rückstand im Vakuum destilliert. Man erhielt 168.74 g eines gelblichen Öls mit einer Siedetemperatur von 95-105 °C bei 0.6 mbar.
¹H-NMR (CDCl₃) (nur Signale von Amidin A3): δ 1.6-1.7 (*m*, 2 H, NCH₂C*H*₂CH₂N(CH₃)₂), 1.75-1.85 (*m*, 2 H, C=NCH₂C*H*₂), 2.00 (s, 3 H, N=C-CH₃), 2.19 (s, 6 H, N(CH₃)₂), 2.18-2.26 (*m*, 2 H, C*H*₂N(CH₃)₂), 3.11-3.20 (*m*, 4 H, NCH₂), 3.26-3.35 (t, 2 H, J = 5.7, NCH₂).

FT-IR: 3233, 2937, 2854, 2814, 2763, 1615, 1459, 1419, 1375, 1351, 1317, 1294, 1260, 1230, 1208, 1152, 1118, 1097, 1085, 1040, 1013, 969, 940, 887, 871, 841, 763, 731.

### Herstellung von Umsetzungsprodukten:

### Amidin U1: Reaktionsprodukt enthaltend 2-(2-Methyl-1,4,5,6-tetrahydropyrimidin-1-yl)ethyl ethyl adipat

In einem Rundkolben wurden 3.22 g des vorgängig hergestellten Amidins A1 mit 4.62 g Diethyl adipat vermischt, die Mischung auf 100 °C erwärmt und bei 100 mbar während 5 Stunden Ethanol abdestilliert . Dann wurde die Reaktionsmischung am Rotationsverdampfer bei 120 °C und 10 mbar vollständig eingeengt. Man erhielt 5.81 g eines orangen, geruchsarmen Öls.
¹H-NMR (CDCl₃): δ 1.25 (*t*, 3 H, J = 7.2, OCH₂C*H*₃), 1.62-1.69 (*m*, 4 H, *CH*₂CH₂C(O)O), 1.75-1.85 (*m*, 2 H, C=NCH₂C*H*₂), 1.98 (s, 3 H, N=C*CH*₃), 2.28-2.37 (*m*, 4 H, CH₂C(O)O), 3.20-3.37 (*m*, 4 H, CH₂N), 3.41 (*t*, 2 H, J = 5.8, N*CH*₂CH₂O), 4.12 (*q*, 2 H, J = 7.2, O*CH*₂CH₃), 4.14-4.20 (*m*, 2 H, J = 5.8, NCH₂*CH*₂O).

FT-IR: 2629, 2852, 1730, 1316, 1482, 1421, 1376, 1317, 1242, 1209, 1170, 1140, 1087, 1075, 1030, 1012, 941, 882, 856, 752.

### Amidin U2: Reaktionsprodukt enthaltend tert.Butyl 3-(3-(2-methyl-1,4,5,6-tetrahydropyrimidin-1-yl)propylamino)propionat

In einem Rundkolben wurden 2.05 g des vorgängig hergestellten Amidins A2 mit 1.74 g tert.Butyl acrylat vermischt und die Mischung unter Rühren auf 100 °C erwärmt, bis nach 3 Stunden mittels Gaschromatographie kein tert.Butylacrylat mehr nachweisbar war. Darauf wurde das Reaktionsgemisch im Vakuum von den flüchtigen Bestandteilen befreit. Man erhielt 3.76 g eines farblosen, geruchsarmen Öls.
¹H-NMR (CDCl₃): δ 1.44 (*s*, 9 H, tert.BuO), 1.61-1.73 (*m,* 2 H, *CH*₂CH₂NH), 1.77-1.86 (*m*, 2 H, C=NCH₂C*H*₂), 1.98 (*s*, 3 H, N=CCH₃), 2.41 (*t*, 2 H, J = 6.4, *CH*₂C(O)O), 2.57-2.64 und 2.78-2.86 (2 x *m*, 2 x 2 H,*CH*₂NHC*H*₂), 3.12-3.24 (*m*, 4 H, CH₂N), 3.27-3.33 (*m,* 2 H, CH₂N).

FT-IR: 3255, 2974, 2926, 2846, 1723, 1616, 1480, 1456, 1420, 1391, 1366, 1317, 1290, 1248, 1228, 1154, 1039, 1014, 942, 879, 846, 754.

### Amidin U3: Reaktionsprodukt enthaltend Tetrahydrofurfuryl 3-(3-(2-methyl-1,4,5,6-tetrahydropyrimidin-1-yl)propylamino)-2-methylpropionat

In einem Rundkolben wurden 2.22 g des vorgängig hergestellten Amidins A2 mit 2.60 g Tetrahydrofurfuryl methacrylat vermischt und die Mischung unter Rühren auf 100 °C erwärmt, bis nach 3 Stunden mittels Gaschromatographie kein Tetrahydrofurfurylmethacrylat mehr nachweisbar war. Darauf wurde das Reaktionsgemisch im Vakuum von den flüchtigen Bestandteilen befreit. Man erhielt 4.65 g eines gelben, geruchsarmen Öls.
¹H-NMR (CDCl₃): δ 1.17 (s, 3 H, *CH*₃CHC(O)O), 1.56-1.71 (*m*, 4 H, *CH*₂CH₂NH und CH₂-THF), 1.75-1.85 (*m*, 2 H, N-CH₂-*CH*₂-CH₂-N), 1.85-1.93 (*m*, 1 H, CH-C(O)O)), 1.97 (*s*, 5 H, N=CCH₃ und THF), 2.5-2.9 (*m,* 4 H, *CH₂*NH*CH₂*)*,* 3.10-3.25 (*m,* 4 H, CH₂N), 3.27-3.33 (*m,* 2 H, CH₂N), 3.78 (*q*, 1 H, J = 7.1, THF), 3.87 (*q*, 1 H, J = 7.3, THF), 3.99-4.20 (*m*, 3 H, THF).

FT-IR: 3265, 2928, 2851, 1730, 1614, 1459, 1422, 1376, 1353, 1318, 1291, 1208, 1175, 1130, 1083, 1018, 994, 920, 879, 816, 756.

### Amidin U4: Reaktionsprodukt enthaltend Ethyl 3-(3-(2-methyl-1,4,5,6-tetrahydropyrimidin-1-yl)propylamino)propionat

In einem Rundkolben wurden 2.75 g des vorgängig hergestellten Amidins A2 mit 1.70 g Ethyl acrylat vermischt und die Mischung unter Rühren auf 100 °C erwärmt, bis nach 4 Stunden mittels Gaschromatographie kein Ethyl acrylat mehr nachweisbar war. Man erhielt ein gelbes, geruchsarmes Öl.

FT-IR: 3159, 2930, 2849, 1730, 1612, 1455, 1429, 1378, 1357, 1319, 1293, 1255, 1206, 1177, 1128, 1046, 1032, 986, 946, 882, 833, 741, 696.

### Amidin U5: Reaktionsprodukt enthaltend Trimethylolpropan tris(7-(2-methyl-1,4,5,6-tetrahydropyrimidin-1-yl)-4-aza-heptanoat)

In einem Rundkolben wurden 3.76 g des vorgängig hergestellten Amidins A2 mit 2.33 g Trimethylolpropan triacrylat vermischt und die Mischung unter Rühren auf 50 °C erwärmt, bis nach 1.5 Stunden mittels Gaschromatographie kein Trimethylolpropan triacrylat mehr nachweisbar war. Man erhielt ein gelbes, geruchsarmes Öl.

FT-IR: 2926, 2849, 1732, 1661, 1610, 1429, 1377, 1357, 1318, 1292, 1252, 1209, 1173, 1125, 1087, 1045, 1031, 947, 883, 837, 776, 740, 697.

### Herstellung eines Silangruppen-haltigen Polvethers:

### Polymer STP-1:

Unter Feuchtigkeitsausschluss wurden 1000 g Polyol Acclaim® 12200 (Polyoxypropylendiol mit niedrigem Ungesättigtheitsgrad, von Bayer; OH-Zahl 11.0 mg KOH/g), 43.6 g Isophorondiisocyanat (IPDI; Vestanat® IPDI, von Evonik), 126.4 g Diisodecylphthalat (DIDP) und 0.1 g Bismuttris(neodecanoat) (10 Gew.-% in DIDP) unter stetigem Rühren auf 90 °C aufgeheizt und auf dieser Temperatur belassen, bis der titrimetrisch bestimmte Gehalt an freien Isocyanatgruppen einen stabilen Wert von 0.63 Gew.-% erreicht hatte. Anschliessend wurden 63.0 g N-(3-Trimethoxysilylpropyl)-amino-bernsteinsäurediethylester (Addukt aus 3-Aminopropyltrimethoxysilan und Maleinsäurediethylester; hergestellt nach den Angaben in US 5,364,955) eingemischt und die Mischung bei 90 °C solange gerührt, bis mittels FT-IR-Spektroskopie kein freies Isocyanat mehr nachgewiesen wurde. Der so erhaltene Trimethoxysilangruppen-haltige Polyether mit einem Silan-Equivalentgewicht von ca. 6880 g/Eq (aus den Einsatzmengen berechnet) wurde auf Raumtemperatur abgekühlt und unter Ausschluss von Feuchtigkeit aufbewahrt.

### Verwendete kommerzielle Katalysatoren und Abkürzungen dafür:

| | |
|---|---|
| DBU | 1,8-Diazabicyclo[5.4.0]undec-7-en (Lupragen® N 700, von BASF) |
| TMG | 1,1,3,3-Tetramethylguanidin (von Sigma-Aldrich) |
| IBAY | Bis(ethylacetoacetato)diisobutoxy-titan(IV) (Tyzor® IBAY, von Dorf Ketal) |

### Zusammensetzungen auf Basis von Silangruppen-haltigen Polymeren:

Vergleichsbeispiele sind in den Tabellen 1 und 2 mit "(Ref)" gekennzeichnet.

### Zusammensetzungen Z1 bis Z8:

Eine Zusammensetzung aus 96.5 g Polymer STP-1, 0.5 g Vinyltrimethoxysilan und 3.0 g 3-Aminopropyltrimethoxysilan wurde mit verschiedenen Katalysatoren in der angegebenen Menge gemäss Tabelle 1 vermengt und die Mischung auf Viskosität und Hautbildungszeit (HBZ) im Normklima, vor und nach Lagerung, geprüft. Die Hautbildungszeit dient dabei als Mass für die Aktivität des Katalysators in Bezug auf die Vernetzungsreaktion der Silangruppen, d.h. für die Vernetzungsgeschwindigkeit; die Veränderung der Viskosität und der Hautbildungszeit nach Lagerung sind ein Mass für die Lagerstabilität. Weiterhin wurde die applizierte Mischung nach 24 Stunden im Normklima daraufhin geprüft, ob die Oberfläche wie gewünscht trocken war oder sich ein schmieriger Film gebildet hatte, was ein Anzeichen für das Ausschwitzen des Katalysators aufgrund schlechter Verträglichkeit mit dem ausgehärteten Kunststoff ist,

und/oder ob die Oberfläche klebrig war, was ein Anzeichen für eine unvollständige Aushärtung ist. Weiterhin wurde von der Mischung ein Film von 2 mm Dicke hergestellt, während 7 Tagen im Normklima aushärten lassen und auf mechanische Eigenschaften geprüft. Die Ergebnisse sind in Tabelle 1 und 2 wiedergegeben. "Zus." steht für "Zusammensetzung".

**Tabelle 1 (Z1 und Z4 sind Vergleichsbeispiele):**

| **Zus.** | **Katalysator** | **Menge** | **Konzentration¹** | **Viskosität [Pa·s]** | | | **HBZ** | |
|---|---|---|---|---|---|---|---|---|
| | | | | **frisch** | **gelagert²** | **Zunahme** | **frisch** | **gelagert²** |
| **Z1** | Amidin A1 | 0.26 g | 1.90 | 22.2 | 25.0 | 13% | 79' | 62' |
| **Z2** | Amidin A2 | 0.29 g | 1.90 | 21.2 | 26.1 | 23% | 28' | 26' |
| **Z3** | Amidin A3 | 0.34 g | 1.90 | 21.3 | 22.2 | 4% | 31' | 32' |
| **Z4** | Amidin U1 | 0.55 g | 1.90 | 21.9 | 29.8 | 36% | 26' | 32' |
| **Z5** | Amidin U2 | 0.52 g | 1.90 | 20.3 | 24.8 | 22% | 20' | 28' |
| **Z6** | Amidin U3 | 0.60 g | 1.90 | 22.1 | 25.3 | 15% | 20' | 27' |
| **Z7** | Amidin U4 | 0.52 g | 1.90 | 28.9 | 33.7 | 17% | 20' | 25' |
| **Z8** | Amidin U5 | 0.48 g | 1.90 | 30.4 | 36.8 | 21% | 32' | 36' |
| **Z9** (Ref) | DBU | 0.28 g | 1.90 | 27.2 | 36.9 | 36% | 25' | 29' |
| **Z10** (Ref) | TMG | 0.21 g | 1.90 | 22.3 | 24.6 | 10% | 65' | 75' |

| | | | | | | | | |
|---|---|---|---|---|---|---|---|---|
| ¹mmol Amidin- oder Guanidin-Gruppen auf 100 g Silangruppen-haltiger Polyether. ² während 7 Tagen bei 60 °C in geschlossenem Gebinde. | | | | | | | | |

**Tabelle 2:**

| **Zus.** | **Oberfläche nach 24h** | **Zugfestigkeit** | **Bruchdehnung** | **E-Modul** | |
|---|---|---|---|---|---|
| | | | | **0-5%** | **0-50%** |
| **Z1** | trocken | 0.75 MPa | 99% | 0.99 MPa | 0.77 MPa |
| **Z2** | fast trocken | 0.69 MPa | 102% | 1.16 MPa | 0.77 MPa |
| **Z3** | fast trocken | 0.62 MPa | 78% | 1.22 MPa | 0.84 MPa |
| **Z4** | trocken | 0.73 MPa | 109% | 1.20 MPa | 0.79 MPa |
| **Z5** | trocken | 0.71 MPa | 103% | 1.17 MPa | 0.80 MPa |
| **Z6** | fast trocken | 0.69 MPa | 99% | 1.25 MPa | 0.80 MPa |
| **Z7** | fast trocken | 0.74 MPa | 111% | 1.21 MPa | 0.81 MPa |
| **Z8** | trocken | 0.79 MPa | 127% | 1.17 MPa | 0.79 MPa |
| **Z9** (Ref) | schmierig | 0.58 MPa | 72% | 1.16 MPa | 0.77 MPa |
| **Z10** (Ref) | klebrig | 0.62 MPa | 90% | 1.19 MPa | 0.75 MPa |

## Patentansprüche

1. Verwendung von
- mindestens einem Amidin der Formel (I),
Y-A-Z (I)
wobei
A für einen zweiwertigen Kohlenwasserstoff-Rest mit 2 bis 30 C-Atomen, welcher gegebenenfalls ungesättigte Anteile und gegebenenfalls Ether-Sauerstoff oder sekundären oder tertiären Amin-Stickstoff enthält, steht,
Y für NR⁸R⁹ oder für NHR⁷ steht, wobei R⁷ für einen Wasserstoff-Rest oder für einen Alkyl- oder Cycloalkyl- oder Aralkyl-Rest mit 1 bis 8 C-Atomen steht und R⁸ und R⁹ unabhängig voneinander für einen Alkyl-Rest mit 1 bis 8 C-Atomen, oder zusammen für einen gegebenenfalls substituierten Alkylen-Rest mit 4 bis 10 C-Atomen stehen, und
Z für eine über ein Stickstoffatom gebundene Amidingruppe steht, wobei Y und Z durch mindestens zwei C-Atome voneinander getrennt sind,
und/oder von
- mindestens einem Umsetzungsprodukt von mindestens einem Amidin der Formel (I) mit mindestens einer funktionellen Verbindung
als Katalysator für die Vernetzung einer Zusammensetzung auf Basis von Silangruppen-haltigen Polymeren,
wobei A nicht für einen Polyoxyalkylenrest steht und wobei das Amidin der Formel (I) kein Stickstoffatom enthält, welches direkt an einen aromatischen Ring gebunden oder Teil eines heteroaromatischen Ringsystems ist.

2. Verwendung gemäss Anspruch 1, **dadurch gekennzeichnet, dass** Z für 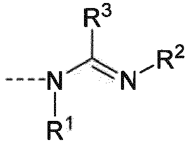 oder 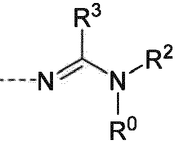 steht, wobei
R⁰ für einen Wasserstoff-Rest oder für einen Alkyl- oder Cycloalkyl- oder Aralkyl-Rest mit 1 bis 8 C-Atomen steht,
R¹ für einen Wasserstoff-Rest oder für einen Alkyl- oder Cycloalkyl- oder Aralkyl-Rest mit 1 bis 8 C-Atomen oder zusammen mit R² für R⁴ steht,
R² für einen Wasserstoff-Rest oder für einen Alkyl-, Cycloalkyl- oder Aralkyl-Rest mit 1 bis 18 C-Atomen, welcher gegebenenfalls Heteroatome enthält, oder zusammen mit R¹ für R⁴ steht,
R³ für einen Wasserstoff-Rest oder für einen Alkyl- oder Cycloalkyl- oder Aralkyl-Rest mit 1 bis 12 C-Atomen steht, und
R⁴ für 1,2-Ethylen oder 1,2-Propylen oder 1,3-Propylen oder 1,3-Butylen oder 1,3-Pentylen steht,
wobei
R⁰ und R² auch zusammen für einen Alkylen-Rest mit 3 bis 6 C-Atomen, welcher gegebenenfalls Ether-Sauerstoff oder tertiären Amin-Stickstoff enthält, stehen können, und
R² und R³ auch zusammen für einen Alkylen-Rest mit 3 bis 6 C-Atomen stehen können.

3. Verwendung gemäss Anspruch 2, **dadurch gekennzeichnet, dass** Z für 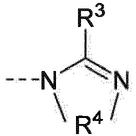 steht.

4. Verwendung gemäss einem der Ansprüche 1 bis 3, **dadurch gekennzeichnet, dass** A ausgewählt ist aus der Gruppe bestehend aus 1,2-Ethylen, 1,3-Propylen, 1,2-Propylen, 1,3-Pentylen, 1,1-Dimethyl-1,2-ethylen, 1,5-Pentylen, 2-Methyl-1,5-pentylen, 1,6-Hexylen, 2,2(4),4-Trimethyl-1,6-hexamethylen, 1,8-Octylen, 1,10-Decylen, 1,12-Dodecylen, (1,5,5-Trimethylcyclohexan-1-yl)methan-1,3, 1,3-Cyclohexylen-bis(methylen), 1,4-Cyclohexylen-bis(methylen), 1,3-Phenylen-bis(methylen), 2- und/oder 4-Methyl-1,3-cyclohexylen, N-Methyl-4-aza-1,7-heptylen, N-Ethyl-4-aza-1,7-heptylen, 3-Aza-1,5-pentylen, 4-Aza-1,7-heptylen, 3-Aza-1,6-hexylen, 7-Aza-1,13-tridecylen, 3-Oxa-1,5-pentylen, 3,6-Dioxa-1,8-octylen und 4,7-Dioxa-1,10-decylen.

5. Verwendung gemäss einem der Ansprüche 1 bis 4, **dadurch gekennzeichnet, dass** Y für NR⁸R⁹ steht, wobei R⁸ und R⁹ unabhängig voneinander für einen Alkyl-Rest mit 1 bis 8 C-Atomen, oder zusammen für einen gegebenenfalls substituierten Alkylen-Rest mit 4 bis 10 C-Atomen stehen.

6. Verwendung gemäss einem der Ansprüche 1 bis 4, **dadurch gekennzeichnet, dass** Y für HX steht, wobei X für NR⁷ steht, wobei R⁷ für einen Wasserstoff-Rest oder für einen Alkyl- oder Cycloalkyl- oder Aralkyl-Rest mit 1 bis 8 C-Atomen steht.

7. Verwendung gemäss Anspruch 6, **dadurch gekennzeichnet, dass** das Amidin der Formel (I) zumindest teilweise als Umsetzungsprodukt mit einer funktionellen Verbindung vorliegt und die funktionelle Verbindung mindestens eine Reaktivgruppe ausgewählt aus Epoxid, Aziridin, Carbonat, Carbonsäureanhydrid, Carbonsäure, Carbonsäureester, Lacton, Carbonsäurechlorid, Keton, Aldehyd, 1,3-Diketon, 1,3-Ketoester, 1,3-Ketoamid, Cyanat, Thiocyanat, Isocyanat, Isothiocyanat, (Meth)acrylat, (Meth)acrylamid, (Meth)acrylnitril, Maleat, Maleamid, Maleimid, Fumarat, Fumaramid, Itaconat, Itaconamid, Crotonat und Crotonamid aufweist.

8. Verwendung gemäss Anspruch 7, **dadurch gekennzeichnet, dass** das Umsetzungsprodukt die Formel (II) aufweist, 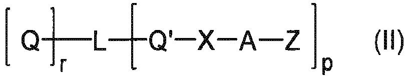 wobei
p für eine ganze Zahl von 1 bis 6 steht und r für eine ganze Zahl von 0 bis 5 steht, wobei (p+r) für eine ganze Zahl von 1 bis 6 steht,
L für
einen (p+r)-wertigen Kohlenwasserstoffrest mit einem mittleren Molekulargewicht im Bereich von 14 bis 20'000 g/mol, welcher gegebenenfalls Heteroatome aufweist,
oder für einen (p+r+1)-wertigen Kohlenwasserstoffrest, welcher zusammen mit Q' einen gegebenenfalls substituierten 5- oder 6-gliedrigen Ring bildet,
oder für eine kovalente Bindung,
oder für einen Wasserstoff-Rest steht,
Q für eine Reaktivgruppe ausgewählt aus Epoxid, Aziridin, Carbonat, Carbonsäureanhydrid, Carbonsäure, Carbonsäureester, Lacton, Carbonsäurechlorid, Keton, Aldehyd, 1,3-Diketon, 1,3-Ketoester, 1,3-Ketoamid, Cyanat, Thiocyanat, Isocyanat, Isothiocyanat, (Meth)acrylat, (Meth)acrylamid, (Meth)acrylnitril, Maleat, Maleamid, Maleimid, Fumarat, Fumaramid, Itaconat, Itaconamid, Crotonat und Crotonamid steht, und
Q' für eine Verbindungseinheit entstanden aus der Reaktion von Q mit HX steht.

9. Verwendung gemäss Anspruch 8, **dadurch gekennzeichnet, dass** Q' ausgewählt ist aus der Gruppe bestehend aus 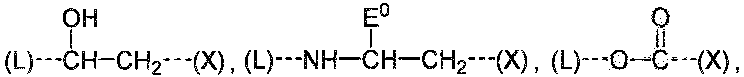 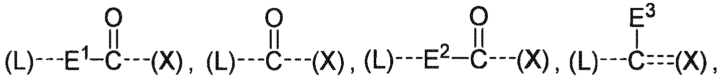 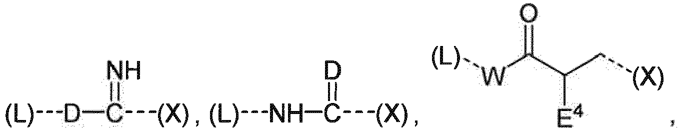 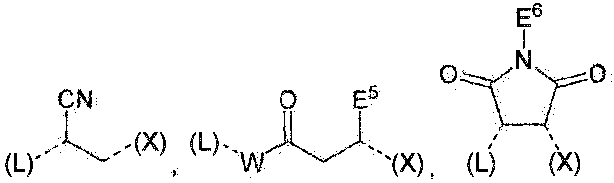 und 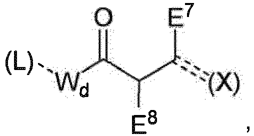 wobei
D für O oder S steht,
W für O oder NR¹⁰ und R¹⁰ für einen Wasserstoff-Rest oder für einen einwertigen Kohlenwasserstoffrest mit 1 bis 8 C-Atomen steht,
E⁰ für einen Wasserstoff-Rest oder für einen Methyl-Rest steht,
E¹ für einen Carboxyl-substituierten Alkylen-, Alkendiyl- oder PhenylenRest mit 2 bis 8 C-Atomen steht,
E² für einen Hydroxyalkylen-Rest mit 2 bis 5 C-Atomen oder für einen über O gebundenen Hydroxyalkylenoxy-Rest mit 2 oder 3 C-Atomen steht,
E³ für einen Wasserstoff-Rest oder für einen einwertigen Kohlenwasserstoffrest mit 1 bis 6 C-Atomen, welcher gegebenenfalls Heteroatome in Form von Ether-, Ester-, Amino- oder Amid-Gruppen aufweist, oder zusammen mit L für einen gegebenenfalls substituierten 1,4-Butylen- oder 1,5-Pentylen-Rest steht,
E⁴ für einen Wasserstoff- oder Methyl- oder Alkoxycarbonylmethyl-Rest mit 2 bis 9 C-Atomen steht,
E⁵ für einen Alkyoxycarbonyl-Rest mit 1 bis 8 C-Atomen oder für einen Methyl-Rest steht,
E⁶ für einen Wasserstoff-Rest oder für einen Alkyl-Rest mit 1 bis 8 C-Atomen steht,
E⁷ für einen einwertigen Kohlenwasserstoffrest mit 1 bis 6 C-Atomen steht,
E⁸ für einen Wasserstoff-Rest oder für einen einwertigen Kohlenwasserstoffrest mit 1 bis 6 C-Atomen steht, und
d für 0 oder 1 steht.

10. Verwendung gemäss einem der Ansprüche 8 oder 9, **dadurch gekennzeichnet, dass** p für 1 oder 2 oder 3 und r für 0 stehen.

11. Verwendung gemäss einem der Ansprüche 1 bis 10, **dadurch gekennzeichnet, dass** das Silangruppen-haltige Polymer ausgewählt ist aus der Gruppe bestehend aus Polyorganosiloxanen mit endständigen Silangruppen und Silangruppen-haltigen organischen Polymeren.

12. Zusammensetzung enthaltend mindestens ein Amidin der Formel (I) und/oder mindestens ein Umsetzungsprodukt wie in einem der Ansprüche 1 bis 10 beschrieben und mindestens ein Silangruppen-haltiges Polymer.

13. Zusammensetzung gemäss Anspruch 12, **dadurch gekennzeichnet, dass** das Silangruppen-haltige Polymer ein Polyorganosiloxan mit endständigen Silangruppen ist.

14. Zusammensetzung gemäss Anspruch 12, **dadurch gekennzeichnet, dass** das Silangruppen-haltige Polymer ein Silangruppen-haltiges organisches Polymer ist.

15. Zusammensetzung gemäss einem der Ansprüche 12 bis 14, **dadurch gekennzeichnet, dass** sie einen Klebstoff oder einen Dichtstoff oder eine Beschichtung darstellt.

## Claims

1. Use of
- at least one amidine of the formula (I)
Y-A-Z (I)
where
A is a divalent hydrocarbyl radical which has 2 to 30 carbon atoms and optionally contains unsaturated components and optionally ether oxygen or secondary or tertiary amine nitrogen,
Y is NR⁸R⁹ or is NHR⁷, where R⁷ is a hydrogen radical or is an alkyl or cycloalkyl or aralkyl radical having 1 to 8 carbon atoms, and R⁸ and R⁹ are independently an alkyl radical having 1 to 8 carbon atoms, or together are an optionally substituted alkylene radical having 4 to 10 carbon atoms, and
Z is an amidine group bonded via a nitrogen atom, where Y and Z are separated from one another by at least two carbon atoms,
and/or of
- at least one reaction product of at least one amidine of the formula (I) with at least one functional compound
as catalyst for the crosslinking of a composition based on polymers containing silane groups,
where A is not a polyoxyalkylene radical and where the amidine of the formula (I) does not contain any nitrogen atom which is directly bonded to an aromatic ring or is part of a heteroaromatic ring system.

2. Use according to Claim 1, **characterized in that** Z is 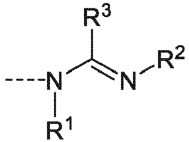 or 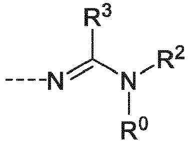 where
R⁰ is a hydrogen radical or is an alkyl or cycloalkyl or aralkyl radical having 1 to 8 carbon atoms,
R¹ is a hydrogen radical or is an alkyl or cycloalkyl or aralkyl radical having 1 to 8 carbon atoms or together with R² is R⁴,
R² is a hydrogen radical or is an alkyl, cycloalkyl or aralkyl radical which has 1 to 18 carbon atoms and optionally contains heteroatoms, or together with R¹ is R⁴,
R³ is a hydrogen radical or is an alkyl or cycloalkyl or aralkyl radical having 1 to 12 carbon atoms, and R⁴ is 1,2-ethylene or 1,2-propylene or 1,3-propylene or 1,3-butylene or 1,3-pentylene,
where
R⁰ and R² together may also be an alkylene radical which has 3 to 6 carbon atoms and may optionally contain ether oxygen or tertiary amine nitrogen, and R² and R³ together may also be an alkylene radical having 3 to 6 carbon atoms.

3. Use according to Claim 2, **characterized in that** Z is

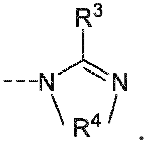

4. Use according to any of Claims 1 to 3, **characterized in that** A is selected from the group consisting of 1,2-ethylene, 1,3-propylene, 1,2-propylene, 1,3-pentylene, 1,1-dimethyl-1,2-ethylene, 1,5-pentylene, 2-methyl-1,5-pentylene, 1,6-hexylene, 2,2(4),4-trimethyl-1,6-hexamethylene, 1,8-octylene, 1,10-decylene, 1,12-dodecylene, (1,5,5-trimethylcyclohexan-1-yl)methane-1,3,1,3-cyclohexylenebis(methylene), 1,4-cyclohexylene-bis(methylene), 1,3-phenylenebis(methylene), 2- and/or 4-methyl-1,3-cyclohexylene, N-methyl-4-aza-1,7-heptylene, N-ethyl-4-aza-1,7-heptylene, 3-aza-1,5-pentylene, 4-aza-1,7-heptylene, 3-aza-1,6-hexylene, 7-aza-1,13-tridecylene, 3-oxa-1,5-pentylene, 3,6-dioxa-1,8-octylene and 4,7-dioxa-1,10-decylene.

5. Use according to any of Claims 1 to 4, **characterized in that** Y is NR⁸R⁹ where R⁸ and R⁹ are independently an alkyl radical having 1 to 8 carbon atoms, or together are an optionally substituted alkylene radical having 4 to 10 carbon atoms.

6. Use according to any of Claims 1 to 4, **characterized in that** Y is HX where X is NR⁷ where R⁷ is a hydrogen radical or is an alkyl or cycloalkyl or aralkyl radical having 1 to 8 carbon atoms.

7. Use according to Claim 6, **characterized in that** the amidine of the formula (I) is present at least partially as a reaction product with a functional compound and the functional compound has at least one reactive group selected from epoxide, aziridine, carbonate, carboxylic anhydride, carboxylic acid, carboxylic ester, lactone, carbonyl chloride, ketone, aldehyde, 1,3-diketone, 1,3-keto ester, 1,3-keto amide, cyanate, thiocyanate, isocyanate, isothiocyanate, (meth)acrylate, (meth)acrylamide, (meth)acrylonitrile, maleate, maleamide, maleimide, fumarate, fumaramide, itaconate, itaconamide, crotonate and crotonamide.

8. Use according to Claim 7, **characterized in that** the reaction product has the formula (II) 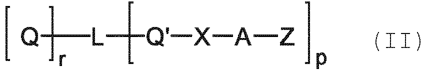 where
p is an integer from 1 to 6 and r is an integer from 0 to 5, where (p+r) is an integer from 1 to 6,
L is
a (p+r)-valent hydrocarbyl radical having a mean molecular weight in the range from 14 to 20'000 g/mol, optionally having heteroatoms,
or a (p+r+1)-valent hydrocarbyl radical which, together with Q', forms an optionally substituted 5- or 6-membered ring,
or is a covalent bond,
or is a hydrogen radical,
Q is a reactive group selected from epoxide, aziridine, carbonate, carboxylic anhydride, carboxylic acid, carboxylic ester, lactone, carbonyl chloride, ketone, aldehyde, 1,3-diketone, 1,3-keto ester, 1,3-keto amide, cyanate, thiocyanate, isocyanate, isothiocyanate, (meth)acrylate, (meth)acrylamide, (meth)acrylonitrile, maleate, maleamide, maleimide, fumarate, fumaramide, itaconate, itaconamide, crotonate and crotonamide, and
Q' is a connecting unit formed from the reaction of Q with HX.

9. Use according to Claim 8, **characterized in that** Q' is selected from the group consisting of 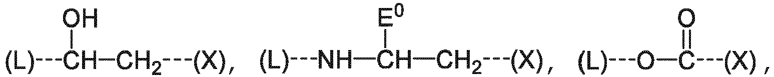 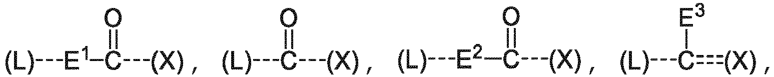 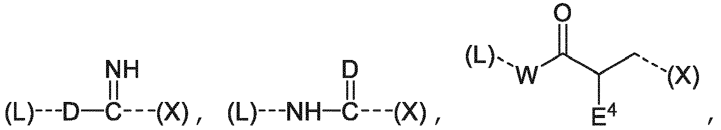 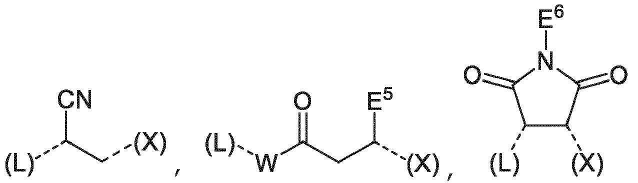 and 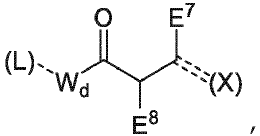 where
D is 0 or S,
W is 0 or NR¹⁰ and R¹⁰ is a hydrogen radical or is a monovalent hydrocarbyl radical having 1 to 8 carbon atoms,
E⁰ is a hydrogen radical or is a methyl radical,
E¹ is a carboxyl-substituted alkylene, alkenediyl or phenylene radical having 2 to 8 carbon atoms,
E² is a hydroxyalkylene radical having 2 to 5 carbon atoms or is an O-bonded hydroxyalkyleneoxy radical having 2 or 3 carbon atoms,
E³ is a hydrogen radical or is a monovalent hydrocarbyl radical having 1 to 6 carbon atoms, optionally having heteroatoms in the form of ether, ester, amino or amide groups, or together with L is an optionally substituted 1,4-butylene or 1,5-pentylene radical,
E⁴ is a hydrogen or methyl or alkoxycarbonylmethyl radical having 2 to 9 carbon atoms,
E⁵ is an alkoxycarbonyl radical having 1 to 8 carbon atoms or is a methyl radical,
E⁶ is a hydrogen radical or is an alkyl radical having 1 to 8 carbon atoms,
E⁷ is a monovalent hydrocarbyl radical having 1 to 6 carbon atoms,
E⁸ is a hydrogen radical or is a monovalent hydrocarbyl radical having 1 to 6 carbon atoms, and d is 0 or 1.

10. Use according to any of Claims 8 or 9, **characterized in that** p is 1 or 2 or 3 and r is 0.

11. Use according to any of Claims 1 to 10, **characterized in that** the polymer containing silane groups is selected from the group consisting of polyorganosiloxanes having terminal silane groups and organic polymers containing silane groups.

12. Composition comprising at least one amidine of the formula (I) and/or at least one reaction product as described in any of claims 1 to 10 and at least one polymer containing silane groups.

13. Composition according to Claim 12, **characterized in that** the polymer containing silane groups is a polyorganosiloxane having terminal silane groups.

14. Composition according to Claim 12, **characterized in that** the polymer containing silane groups is an organic polymer containing silane groups.

15. Composition according to any of Claims 12 to 14, **characterized in that** it is an adhesive or a sealant or a coating.

## Revendications

1. Utilisation
- d'au moins une amidine de la formule (I),
Y-A-Z (I)
où
A représente un radical hydrocarboné bivalent de 2 à 30 atomes C, qui contient éventuellement des fractions insaturées et éventuellement un oxygène d'éther ou un azote d'amine secondaire ou tertiaire,
Y représente NR⁸R⁹ ou NHR⁷, où R⁷ représente un radical hydrogène ou un radical alkyle ou cycloalkyle ou aralkyle de 1 à 8 atomes C, et R⁸ et R⁹ représentent indépendamment l'un de l'autre un radical alkyle de 1 à 8 atomes C, ou représentent ensemble un radical alkylène éventuellement substitué de 4 à 10 atomes C, et
Z représente un groupe amidine relié par un atome d'azote,
où Y et Z sont séparés l'un de l'autre par au moins deux atomes C,
et/ou
- d'au moins un produit de réaction d'au moins une amidine de la formule (I) avec au moins un composé fonctionnel
en tant que catalyseur pour la réticulation d'une composition à base de polymères contenant des groupes silane,
où A ne représente pas un radical polyoxyalkylène et où l'amidine de la formule (I) ne contient pas d'atome d'azote qui est relié directement à un cycle aromatique ou fait partie d'un système cyclique hétéroaromatique.

2. Utilisation selon la revendication 1, **caractérisée en ce que** Z représente 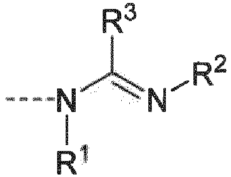 ou 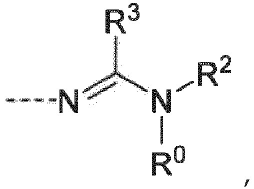 où
R⁰ représente un radical hydrogène ou un radical alkyle ou cycloalkyle ou aralkyle de 1 à 8 atomes C,
R¹ représente un radical hydrogène ou un radical alkyle ou cycloalkyle ou aralkyle de 1 à 8 atomes C ou représente, conjointement avec R², R⁴,
R² représente un radical hydrogène ou un radical alkyle, cycloalkyle ou aralkyle de 1 à 18 atomes C, qui contient éventuellement des hétéroatomes, ou représente, conjointement avec R¹, R⁴,
R³ représente un radical hydrogène ou un radical alkyle ou cycloalkyle ou aralkyle de 1 à 12 atomes C, et
R⁴ représente 1,2-éthylène ou 1,2-propylène ou 1,3-propylène ou 1,3-butylène ou 1,3-pentylène,
où
R⁰ et R² peuvent également représenter ensemble un radical alkylène de 3 à 6 atomes C, qui contient éventuellement un oxygène d'éther ou un azote d'amine tertiaire, et
R² et R³ peuvent également représenter ensemble un radical alkylène de 3 à 6 atomes C.

3. Utilisation selon la revendication 2, **caractérisée en ce que** Z représente

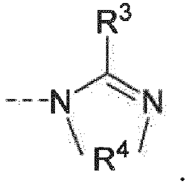

4. Utilisation selon l'une quelconque des revendications 1 à 3, **caractérisée en ce qu'**A est choisi dans le groupe constitué par 1,2-éthylène, 1,3-propylène, 1,2-propylène, 1,3-pentylène, 1,1-diméthyl-1,2-éthylène, 1,5-pentylène, 2-méthyl-1,5-pentylène, 1,6-hexylène, 2,2(4),4-triméthyl-1,6-hexaméthylène, 1,8-octylène, 1,10-décylène, 1,12-dodécylène, (1,5,5-triméthylcyclohexan-1-yl)méthane-1,3,1,3-cyclohexylène-bis(méthylène), 1,4-cyclohexylène-bis(méthylène), 1,3-phénylène-bis(méthylène), 2- et/ou 4-méthyl-1,3-cyclohexylène, N-méthyl-4-aza-1,7-heptylène, N-éthyl-4-aza-1,7-heptylène, 3-aza-1,5-pentylène, 4-aza-1,7-heptylène, 3-aza-1,6-hexylène, 7-aza-1,13-tridécylène, 3-oxa-1,5-pentylène, 3,6-dioxa-1,8-octylène et 4,7-dioxa-1,10-décylène.

5. Utilisation selon l'une quelconque des revendications 1 à 4, **caractérisée en ce qu'**Y représente NR⁸R⁹, où R⁸ et R⁹ représentent indépendamment l'un de l'autre un radical alkyle de 1 à 8 atomes C, ou représensent ensemble un radical alkylène éventuellement substitué de 4 à 10 atomes C.

6. Utilisation selon l'une quelconque des revendications 1 à 4, **caractérisée en ce qu'**Y représente HX, où X représente NR⁷, où R⁷ représente un radical hydrogène ou un radical alkyle ou cycloalkyle ou aralkyle de 1 à 8 atomes C.

7. Utilisation selon la revendication 6, **caractérisée en ce que** l'amidine de la formule (I) se présente au moins partiellement sous la forme d'un produit de réaction avec un composé fonctionnel et le composé fonctionnel comprend au moins un groupe réactif choisi parmi époxyde, aziridine, carbonate, anhydride d'acide carboxylique, acide carboxylique, ester d'acide carboxylique, lactone, chlorure d'acide carboxylique, cétone, aldéhyde, 1,3-dicétone, 1,3-cétoester, 1,3-cétoamide, cyanate, thiocyanate, isocyanate, isothiocyanate, (méth)acrylate, (méth)acrylamide, (méth)acrylonitrile, maléate, maléamide, maléimide, fumarate, fumaramide, itaconate, itaconamide, crotonate et crotonamide.

8. Utilisation selon la revendication 7, **caractérisée en ce que** le produit de réaction présente la formule (II) , 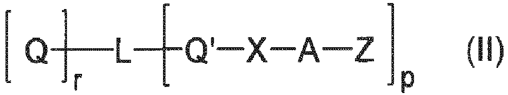 où
p représente un nombre entier de 1 à 6 et r représente un nombre entier de 0 à 5, où (p+r) représente un nombre entier de 1 à 6,
L représente
un radical hydrocarboné (p+r)-valent ayant un poids moléculaire moyen dans la plage allant de 14 à 20 000 g/mol, qui comprend éventuellement des hétéroatomes,
ou un radical hydrocarboné (p+r+1)-valent, qui forme conjointement avec Q' un cycle à 5 ou 6 chaînons éventuellement substitué,
ou une liaison covalente,
ou un radical hydrogène,
Q représente un groupe réactif choisi parmi époxyde, aziridine, carbonate, anhydride d'acide carboxylique, acide carboxylique, ester d'acide carboxylique, lactone, chlorure d'acide carboxylique, cétone, aldéhyde, 1,3-dicétone, 1,3-cétoester, 1,3-cétoamide, cyanate, thiocyanate, isocyanate, isothiocyanate, (méth)acrylate, (méth)acrylamide, (méth)acrylonitrile, maléate, maléamide, maléimide, fumarate, fumaramide, itaconate, itaconamide, crotonate et crotonamide, et
Q' représente une unité de liaison formée par la réaction de Q avec HX.

9. Utilisation selon la revendication 8, **caractérisée en ce que** Q' est choisi dans le grouoe constitué par : 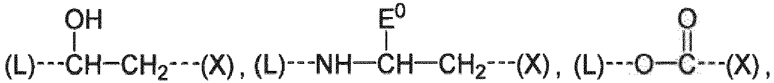 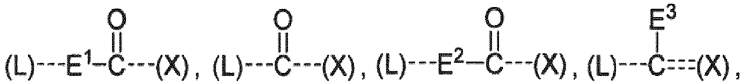 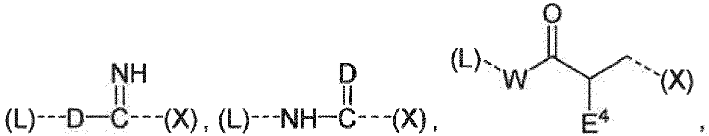 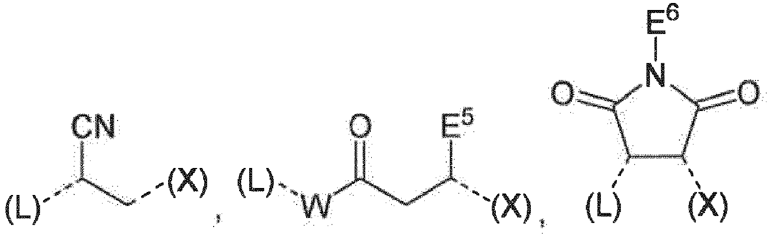 et 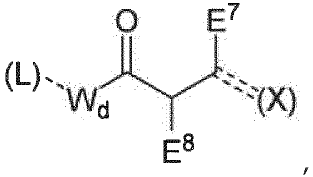 où
D représente O ou S,
W représente O ou NR¹⁰ et R¹⁰ représente un radical hydrogène ou un radical hydrocarboné monovalent de 1 à 8 atomes C,
E⁰ représente un radical hydrogène ou un radical méthyle,
E¹ représente un radical alkylène, alcène-diyle ou phénylène à substitution carboxyle de 2 à 8 atomes C,
E² représente un radical hydroxyalkylène de 2 à 5 atomes C ou un radical hydroxyalkylénoxy relié par O de 2 ou 2 atomes C,
E³ représente un radical hydrogène ou un radical hydrocarboné monovalent de 1 à 6 atomes C, qui comprend éventuellement des hétéroatomes sous la forme de groupes éther, ester, amino ou amide, ou représente conjointement avec L un radical 1,4-butylène ou 1,5-pentylène éventuellement substitué,
E⁴ représente un radical hydrogène ou méthyle ou alcoxycarbonylméthyle de 2 à 9 atomes C,
E⁵ représente un radical alkyloxycarbonyle de 1 à 8 atomes C ou un radical méthyle,
E⁶ représente un radical hydrogène ou un radical alkyle de 1 à 8 atomes C,
E⁷ représente un radical hydrocarboné monovalent de 1 à 6 atomes C,
E⁸ représente un radical hydrogène ou un radical hydrocarboné monovalent de 1 à 6 atomes C, et
d représente 0 ou 1.

10. Utilisation selon l'une quelconque des revendications 8 ou 9, **caractérisée en ce que** p représente 1 ou 2 ou 3 et r représente 0.

11. Utilisation selon l'une quelconque des revendications 1 à 10, **caractérisée en ce que** le polymère contenant des groupes silane est choisi dans le groupe constitué par les polyorganosiloxanes munis de groupes silane terminaux et les polymères organiques contenant des groupes silane.

12. Composition contenant au moins une amidine de la formule (I) et/ou au moins un produit de réaction tel que décrit dans l'une quelconque des revendications 1 à 10 et au moins un polymère contenant des groupes silane.

13. Composition selon la revendication 12, **caractérisée en ce que** le polymère contenant des groupes silane est un polyorganosiloxane muni de groupes silane terminaux.

14. Composition selon la revendication 12, **caractérisée en ce que** le polymère contenant des groupes silane est un polymère organique contenant des groupes silane.

15. Composition selon l'une quelconque des revendications 12 à 14, **caractérisée en ce qu'**elle consiste en un adhésif ou un agent d'étanchéité ou un revêtement.
